# EUROPÄISCHE PATENTSCHRIFT

(11) **EP 3 702 258 B1**
(45) Veröffentlichungstag und Bekanntmachung des Hinweises auf die Patenterteilung: **15.12.2021**
(21) Anmeldenummer: 20159067.6
(22) Anmeldetag: 24.02.2020
(51) Int. Cl.: B62K 11/00

(54) **DYNAMISCH SELBSTBALANCIERENDES ZWEIRAD-FAHRZEUG**
DYNAMIC SELF-BALANCING TWO-WHEEL VEHICLE
VÉHICULE À DEUX ROUES À AUTO-ÉQUILIBRAGE DYNAMIQUE

(30) Priorität: 26.02.2019 DE 102019202546
(43) Veröffentlichungstag der Anmeldung: 02.09.2020
(73) Patentinhaber: Maurer, Armin, 71404 Korb (DE); Maurer, Cornelia, 71404 Korb (DE); Bernhard, Uwe, 71522 Backnang (DE)
(72) Erfinder: Maurer, Armin, 71404 Korb (DE)
(74) Vertreter: BRP Renaud & Partner mbB Rechtsanwälte Patentanwälte Steuerberater

(56) Entgegenhaltungen:
- WO-A1-2012/017335
- WO-A1-2016/095203
- CN-A- 107 364 526
- CN-B- 102 514 663
- DE-A1-102017 211 838
- US-A1- 2010 017 106
- US-A1- 2010 114 468
- US-A1- 2015 353 158
- US-A1- 2016 332 690

## Beschreibung

Die vorliegende Erfindung betrifft ein dynamisch selbstbalancierendes Zweirad-Fahrzeug, das mit einem Fahrgestell ausgestattet ist und einen Fahrzeugsitz aufweist. Ein derartiges Zweirad-Fahrzeug ist daher für einen sitzenden Fahrer (männlich, weiblich, divers) vorgesehen.

Allgemein bekannt sind elektrisch angetriebene Rollstühle, die als Vierrad-Fahrzeuge ausgestaltet sind und dementsprechend vier Räder aufweisen. Diese Vierrad-Fahrzeuge besitzen in der Regel eine geringe Geschwindigkeit, eine geringe Reichweite, im Grunde keine Geländegängigkeit und eignen sich zwar für den täglichen Gebrauch, jedoch nicht für Ausflüge, insbesondere auf ungeteerten Wegen, wie z.B. Waldwegen. Hinzu kommt, dass derartige konventionelle rollstuhlartige Vierrad-Fahrzeuge in der Regel ein wenig attraktives Aussehen besitzen und leicht zu einer Stigmatisierung der Fahrer als optisch sichtbar gehbehinderte Menschen führen. Die Betroffenen fühlen sich deshalb häufig ausgeschlossen und werden nicht selten ausgegrenzt oder ziehen sich dadurch von selbst zurück.

Erleichterung schaffen dynamisch selbstbalancierende Zweirad-Fahrzeuge der eingangs genannten Art. Derartige Zweirad-Fahrzeuge sind beispielsweise aus der gattungsgemäßen DE 10 2015 219 848 B3 bekannt. Sie besitzen ein Fahrgestell, das einen Fahrzeugsitz trägt und das zwei Räder aufweist, die um eine gemeinsame Raddrehachse drehbar am Fahrgestell angeordnet sind. Jedes Rad ist mit einem eigenen Elektromotor antriebsverbunden. Ferner sind für beide Räder eine gemeinsame Neigungssensorik und eine gemeinsame Balancesteuerung vorgesehen. Ferner ist ein derartiges Zweirad-Fahrzeug außerdem mit einer Lenkeinrichtung zum Lenken des Zweirad-Fahrzeugs ausgestattet.

Derartige selbstbalancierende Zweirad-Fahrzeuge zeichnen sich gegenüber herkömmlichen rollstuhlähnlichen Vierrad-Fahrzeugen durch eine bessere Geländegängigkeit aus, da ihre Räder üblicherweise einen deutlich größeren Durchmesser und auch Querschnitt aufweisen als die Räder eines Vierrad-Fahrzeugs. Außerdem zeichnen sich diese Zweirad-Fahrzeuge durch ein attraktives Erscheinungsbild aus, wodurch die vorstehend erwähnte Stigmatisierung häufig ausbleibt.

Derartige Zweirad-Fahrzeuge für sitzende Fahrer bauen dabei auf dynamisch selbstbalancierenden Zweirad-Fahrzeugen für stehende Fahrer auf, wie sie beispielsweise aus der US 7 740 099 B2 bekannt sind und unter der Bezeichnung "Segway" ^{®} des Herstellers Segway Incorporated bekannt geworden sind. Derartige dynamisch balancierende Zweirad-Fahrzeuge, ob nun für stehenden oder für sitzenden Fahrer, werden dadurch zum Beschleunigen oder zum Bremsen betätigt, dass der Fahrer seinen Schwerpunkt nach vorne bzw. nach hinten verlagert, wodurch das Fahrgestell um die Raddrehachse nach vorn oder nach hinten kippt. Dies führt zu einer Veränderung der Neigung der Neigungssensorik um eine parallel zur Raddrehachse verlaufende Neigungsachse gegenüber einer Horizontalebene, die den ausbalancierten Zustand repräsentiert. Die Balancesteuerung kann nun in Abhängigkeit der Neigung die Räder zum Beschleunigen oder Abbremsen des Fahrzeugs ansteuern, um das Fahrzeug so wieder auszubalancieren. Diese dynamisch ablaufende Selbstbalancierung führt dann zur gewünschten Beschleunigung bzw. Abbremsung des Fahrzeugs. Zum Lenken des Fahrzeugs betätigt der Fahrer die Lenkeinrichtung, die dann von einer entsprechenden Steuereinrichtung dazu genutzt wird, eines der Räder stärker anzutreiben als das andere, um so die gewünschte Kurve zu erzeugen.

Für stehende Fahrer sind außerdem dynamisch selbstbalancierendes Einrad-Fahrzeuge bekannt, beispielsweise aus der US 8 800 697 B2 und US 8 807 250 B2. Ein derartiges dynamisch selbstbalancierendes Einrad-Fahrzeug weist ein Rad, einen Elektromotor, eine Neigungssensorik, eine Balancesteuerung und ein Gehäuse auf. Das Rad ist am Gehäuse um eine Raddrehachse drehbar gelagert. Der Elektromotor, eine zugehörige Batterie, die Neigungssensorik und die Balancesteuerung sind im Gehäuse untergebracht. Ferner kann das Fahrzeug am Gehäuse, insbesondere ausklappbare, Trittbretter aufweisen, die beiderseits des Rads am Gehäuse angeordnet sind und auf denen der Fahrer stehen kann. Alternativ dazu kann auch bei einem solchen Einrad-Fahrzeug ein Fahrersitz mittig am Gehäuse angeordnet sein, auf dem der Fahrer Platz nehmen kann. Zum Beschleunigen und Abbremsen des Einrad-Fahrzeugs muss sich auch hier der Fahrer nach vorn bzw. nach hinten neigen. Die Balancesteuerung balanciert das Einrad-Fahrzeug dann dynamisch von selbst, also automatisch nach vorn bzw. nach hinten, was zur gewünschten Beschleunigung bzw. Abbremsung führt. Zum Lenken muss der Fahrer selbst nach links bzw. nach rechts balancieren, um die gewünschte Kurvenfahrt zu erzeugen.

Ferner sind für stehende Fahrer sogenannte Hoverboards bekannt, wie zum Beispiel aus der US 8 738 278 B2. Ein derartiges Hoverboard ist ebenfalls ein dynamisch selbstbalancierendes Zweirad-Fahrzeug mit einem Fahrgestell, das zwei Fahrgestellhälften aufweist, die mittig gelenkig miteinander verbunden sind, derart, dass sie sich um die gemeinsame Raddrehachse gegeneinander verdrehen lassen. Jede Fahrgestellhälfte weist ein Rad, einen Elektromotor, eine Neigungssensorik und eine Balancesteuerung auf. Jede Fahrgestellhälfte definiert ein Trittbrett für je einen Fuß des auf dem Zweirad-Fahrzeug stehenden Fahrers. Durch synchrones bzw. symmetrisches Neigen beider Fahrgestellhälften nach vorn bzw. hinten erfolgt ein Beschleunigen bzw. Abbremsen des Zweirad-Fahrzeugs. Durch ein asynchrones bzw. asymmetrisches Neigen der beiden Fahrgestellhälften, also durch ein Verwinden des Fahrgestells um die Raddrehachse lässt sich dieses Zweirad-Fahrzeug lenken.

Aus der CN 203 996 652 U ist ein weiteres dynamisch selbstbalancierendes Zweirad-Fahrzeug für einen stehenden Fahrzeugführer bekannt, das nach Art eines Hoverboards aufgebaut ist, bei dem jedoch zur Realisierung der beiden Fahrgestellhälften jeweils ein dynamisch selbstbalancierendes Einrad-Fahrzeug verwendet wird. Die beiden Einrad-Fahrzeuge sind an den einander zugewandten inneren Trittbrettern um eine parallel zur Raddrehachse verlaufende Schwenkachse schwenkbar aneinander gelagert.

Ähnliche Zweirad-Fahrzeuge sind auch aus der CN 203 888 957 U und aus der WO 201695203 A1 bekannt. Dort ist an den Gehäusen der beiden Einrad-Fahrzeuge jeweils eine nach oben abstehende Stange angebracht, die der stehende Fahrzeugführer mit je einer Hand greifen kann. Über diese Stangen kann der Fahrzeugführer die Neigung der Einrad-Fahrzeuge zueinander um die Schwenkachse manuell verändern, um so das Zweirad-Fahrzeug zu lenken. Ein ähnliches Zweirad-Fahrzeug ist auch aus der CN 102 514 663 B bekannt. Dort ist nur an einem Gehäuse der beiden Einrad-Fahrzeuge eine solche Stange angebracht.

Die vorliegende Erfindung beschäftigt sich mit dem allgemeinen Problem, die Attraktivität der eingangs genannten dynamisch selbstbalancierenden Zweirad-Fahrzeuge für sitzende Fahrer zu verbessern.

Gemäß einem ersten Aspekt sollen die Traglast und Reichweite des Zweirad-Fahrzeugs erhöht werden, damit das Zweirad-Fahrzeug auch für Fahrer mit erhöhtem Körpergewicht nutzbar ist und auch größere Unternehmungen erlaubt. Menschen mit Gehbehinderung nehmen mangels Bewegung häufig an Gewicht zu und können dadurch die Traglast herkömmlicher dynamisch selbstbalancierender Zweirad-Fahrzeuge für sitzende Fahrer erreichen bzw. übersteigen. Da die herkömmlichen dynamisch selbstbalancierenden Zweirad-Fahrzeuge für sitzende Fahrer in der Regel auf der Plattform eines herkömmlichen dynamisch selbstbalancierenden Zweirad-Fahrzeugs für stehenden Fahrer aufgebaut werden, steht grundsätzlich die Traglast des für den stehenden Fahrer vorgesehenen Zweirad-Fahrzeugs zur Verfügung, wobei jedoch das zusätzliche Gewicht des Fahrzeugsitzes und des hierfür erforderlichen Aufbaus die Zuladung für den Fahrer reduziert.

Gemäß einem zweiten Aspekt soll die Sicherheit, insbesondere die Ausfallsicherheit eines derartigen Zweirad-Fahrzeugs verbessert werden. Bei einem herkömmlichen selbstbalancierenden Zweirad-Fahrzeug kann die Elektronik das Auftreten eines Fehlers erkennen und gegebenenfalls selbsttätig das Fahrzeug zum Stillstand bringen, beispielsweise wenn einer der Elektromotoren auszufallen droht. Zuvor kann der Fahrer durch entsprechende Signale gewarnt werden. Ein stehender Fahrer kann zur Not einfach vom Fahrzeug abspringen. Ein sitzender Fahrer, insbesondere ein gehbehinderter Fahrer, kann dies dagegen nicht. Somit besteht für sitzende Fahrer bei herkömmlichen selbstbalancierenden Zweirad-Fahrzeugen ein gewisses Risiko, falls beispielsweise einer der Elektromotoren oder eine der elektronischen Komponenten ausfällt. Dieses Risiko soll gemäß dem zweiten Aspekt reduziert werden.

Gemäß einem dritten Aspekt soll die Handhabung eines derartigen Zweirad-Fahrzeugs vereinfacht werden. Beispielsweise sind Menschen mit stärkerer körperlicher Behinderung nicht immer in der Lage, ihren Körperschwerpunkt ausreichend oder ausreichend schnell verlagern zu können, um das Zweirad-Fahrzeug in gewünschter Weise beschleunigen bzw. bremsen zu können. Auch fehlt manchen Fahrern bereits die Kraft, eine herkömmliche Lenkstange ausreichend zum Lenken des Fahrzeugs zu betätigen. Gemäß dem dritten Aspekt soll das erfindungsgemäße Zweirad-Fahrzeug hier Abhilfe schaffen und das Lenken bzw. das Steuern zum Beschleunigen und Bremsen des Fahrzeugs vereinfachen.

Weitere wichtige Aspekte der vorliegenden Erfindung sind beispielsweise auch eine Verbesserung des Zweirad-Fahrzeugs hinsichtlich des Bremsverhaltens, insbesondere bei Notfällen. Beispielsweise kann bei drohender Gefahr eine stärkere Abbremsung als üblich erforderlich werden, um beispielsweise eine Kollision zu vermeiden. Ebenso ist denkbar, die Handhabung des Zweirad-Fahrzeugs für einen gehbehinderten Fahrer zu vereinfachen, um das Zweirad-Fahrzeug in ein Kraftfahrzeug des Fahrers oder in eine zugehörige Garage zu überführen und umgekehrt.

Das erfindungsgemäße Problem wird durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, ein dynamisch selbstbalancierendes Zweirad-Fahrzeug dadurch zu bilden, dass das mit dem Fahrzeugsitz ausgestattete Fahrgestell des Zweirad-Fahrzeugs mit zwei dynamisch selbstbalancierenden Einrad-Fahrzeugen ausgestattet wird. Jedes der beiden Einrad-Fahrzeuge weist jeweils ein Rad, einen Elektromotor, eine Neigungssensorik, eine Balancesteuerung und ein Gehäuse auf. Es ist klar, dass das jeweilige Einrad-Fahrzeug außerdem eine eigene Batterie zur Stromversorgung aufweisen kann. Ebenso ist denkbar, den beiden Einrad-Fahrzeugen eine gemeinsame Batterie oder Batteriegruppe zuzuordnen. Die beiden Einrad-Fahrzeuge werden am gemeinsamen, durchgehenden Fahrgestell so angebracht, dass die beiden Räder eine gemeinsame Raddrehachse definieren. Zur Realisierung des hier vorgestellten Zweirad-Fahrzeugs lassen sich insbesondere im Handel erhältlich Einrad-Fahrzeuge verwenden. Derartige konventionelle Einrad-Fahrzeuge besitzen eine Traglast, die für einen durchschnittlichen Fahrer ausreicht. Durch die Verwendung von zwei solchen Einrad-Fahrzeugen am erfindungsgemäßen Zweirad-Fahrzeug lässt sich die Traglast des Zweirad-Fahrzeugs signifikant erhöhen. Hierdurch wird das hier vorgestellte dynamisch selbstbalancierende Zweirad-Fahrzeug auch für Fahrer mit erhöhtem Gewicht nutzbar.

Des Weiteren hat sich gezeigt, dass beispielsweise der Ausfall eines Elektromotors nicht zwingend zu einem vollständigen Balanceverlust des Zweirad-Fahrzeugs führen muss, da der jeweils andere Elektromotor und somit das zugehörige Einrad-Fahrzeug noch voll funktionsfähig ist. Insbesondere kann das verbleibende Einrad-Fahrzeug - abhängig von der aktuellen Fahrsituation - das Fahrgestell noch immer ausbalancieren. Gegebenenfalls kann es zu einer Kurvenfahrt kommen, die jedoch noch nicht per se gefährlich sein muss.

Im Einzelnen ist das hier vorgestellte selbstbalancierende Zweirad-Fahrzeug außerdem mit einer Lenkeinrichtung zum Lenken des Zweirad-Fahrzeugs ausgestattet, die mit den Neigungssensoriken der beiden Zweirad-Fahrzeuge gekoppelt ist. Die Kopplung der Lenkeinrichtung mit den Neigungssensoriken erfolgt dabei derart, dass eine Lenkbetätigung der Lenkeinrichtung eine Neigung von wenigstens einer der beiden Neigungssensoriken um eine parallel zur Raddrehachse verlaufende Neigungsachse gegenüber dem Fahrgestell verändert. Diese Neigungsveränderung erfolgt dabei gezielt so, dass das jeweilige Rad von der zugehörigen Balancesteuerung zum Beschleunigung oder Bremsen angesteuert wird, um so eine mit der Lenkbetätigung korrelierte Lenkbewegung des Zweirad-Fahrzeugs zu erzeugen. Da die Veränderung der Neigung der jeweiligen Neigungssensorik gegenüber dem Fahrgestell erfolgt, wird dadurch die Neigung des Fahrgestells selbst nicht oder nicht wesentlich verändert. Das heißt, dass sich das Fahrgestell parallel zur Raddrehachse ungeteilt erstrecken kann und den Fahrzeugsitz stabil tragen kann. Insbesondere ist keine Verwindung des Gehäuses um die Raddrehachse erforderlich, um eine Lenkbewegung zu erzeugen.

Gemäß einer vorteilhaften Ausführungsform kann die Lenkeinrichtung mit den beiden Neigungssensoriken so gekoppelt sein, dass eine Lenkbetätigung der Lenkeinrichtung nur die Neigung von einer der beiden Neigungssensoriken verändert. Insbesondere kann vorgesehen sein, dass nur die Neigung der dem kurvenäußeren Rad zugeordneten Neigungssensorik verändert wird. Das heißt, dass es zum Lenken des Fahrzeugs nach links z.B. ausreicht, das rechte Rad etwas schneller anzutreiben als das linke Rad. Ebenso ist zur Realisierung einer Lenkbewegung nach links denkbar, das linke Rad, also das kurveninnere Rad etwas abzubremsen, so dass es etwas langsamer dreht als das rechte Rad.

Alternativ dazu kann die Lenkeinrichtung mit den beiden Neigungssensoriken auch so gekoppelt sein, dass bei fahrendem Zweirad-Fahrzeug eine Lenkbetätigung der Lenkeinrichtung die Neigungen beider Neigungssensoriken so verändert, dass das kurvenäußere Rad beschleunigt, während das kurveninnere Rad gebremst wird. Das bedeutet, dass zum Lenken des Fahrzeugs nach links das rechte Rad beschleunigt und gleichzeitig das linke Rad abgebremst wird, wodurch eine extrem direkt ansprechende Lenkbewegung realisierbar ist.

Zusätzlich zu den beiden vorstehenden Alternativen, die zumindest für das fahrende Fahrzeug realisierbar sind, kann die Lenkeinrichtung gemäß einer weiteren Ausführungsform mit den beiden Neigungssensoriken optional auch so gekoppelt sein, dass bei stehendem Zweirad-Fahrzeug eine Lenkbetätigung der Lenkeinrichtung die Neigung der beiden Neigungssensoriken entgegengesetzt verändert, so dass das eine Rad nach vorn antreibt, während das andere Rad nach hinten antreibt. Hierdurch lässt sich das stehende Fahrzeug quasi auf der Stelle um eine vertikale zentrale Hochachse drehen.

Erfindungsgemäß ist vorgesehen, dass das jeweilige Gehäuse bezüglich der Neigungsachse drehfest am Fahrgestell angebracht ist. Hierdurch lässt sich das Fahrgestell besonders einfach fest und stabil mit den beiden Gehäusen verbinden, so dass die beiden Gehäuse und das Fahrgestell gemeinsam einen stabilen Tragrahmen bzw. ein stabiles Chassis für den Fahrzeugsitz bilden. Ferner ist die Neigungssensorik von wenigstens einem der beiden Einrad-Fahrzeuge außerhalb des jeweiligen Gehäuses am Fahrgestell beweglich angebracht, derart, dass die Neigung der jeweiligen Neigungssensorik gegenüber dem Fahrgestell veränderbar ist. Die Lenkeinrichtung ist mit der jeweiligen Neigungssensorik so gekoppelt, dass eine Lenkbetätigung der Lenkeinrichtung die Neigung von wenigstens einer der Neigungssensoriken verändert. Sofern auch hier wieder herkömmliche konventionelle Einrad-Fahrzeuge zum Einsatz kommen, wird für die Realisierung der vorgestellten bevorzugten Ausführungsform die jeweilige Neigungssensorik aus dem jeweiligen Gehäuse ausgebaut und außerhalb des jeweiligen Gehäuses am Fahrgestell angeordnet, derart, dass die jeweilige Neigungssensorik um die Neigungsachse drehbar ist, um die Neigung gegenüber dem Fahrgestell variieren zu können. Zweckmäßig erfolgt die Anordnung der jeweiligen Neigungssensorik am Fahrgestell im Bereich der Raddrehachse oder entlang einer durch die Raddrehachse verlaufenden Vertikalen bei ausbalanciertem Fahrzeug. Die Anordnung der wenigstens einen Neigungssensorik außerhalb der Gehäuse am bzw. im Fahrgestell hat zur Folge, dass zum Steuern bzw. zum Lenken des Fahrzeugs nur die Neigung der jeweiligen Neigungssensorik verändert werden muss. Da die Neigungssensorik im Vergleich zum Gehäuse klein ist, vereinfacht sich der Aufwand zur Lagerung der jeweiligen Neigungssensorik am bzw. im Fahrgestell sowie zum Koppeln der jeweiligen Neigungssensorik mit der Lenkeinrichtung. Ferner lässt sich durch die feste Anbindung der Gehäuse an dem Fahrgestell insgesamt die Stabilität des Zweirad-Fahrzeugs erheblich verbessern. Es ist ausreichend, wenn nur eine der Neigungssensoriken bezüglich der Neigungsachse schwenkbar am Fahrgestell angebracht ist, während die andere Neigungssensorik bezüglich der Neigungsachse drehfest mit dem zugehörigen Gehäuse verbunden ist. Insbesondere kann diese Neigungssensorik im zugehörigen Gehäuse verbleiben. Alternativ können beide Neigungssensoriken um die Neigungsachse schwenkbar am Fahrgestell angebracht sein.

Eine andere Ausführungsform schlägt vor, dass die Lenkeinrichtung ein betätigbares Betätigungselement zum Erzeugen der Lenkbetätigung aufweist. Ein derartiges Betätigungselement kann vorzugsweise als manuell betätigbares Betätigungselement ausgestaltet sein und kann beispielsweise ein Handgriff oder eine Lenkstange oder ein Lenkrad sein. Alternativ kann ein derartiges Betätigungselement auch durch den Fahrzeugsitz gebildet sein, der hierzu am Fahrgestell um eine parallel zur Längsachse schwenkbar angeordnet ist. Ein Schwenken des Fahrzeugsitzes nach links oder rechts erzeugt dann eine Lenkbewegung des Zweirad-Fahrzeugs nach links bzw. nach rechts.

Bei einer Lenkeinrichtung mit einem solchen betätigbaren Betätigungselement kann gemäß einer bevorzugten Ausführungsform eine mechanische Kopplungseinrichtung vorgesehen sein, die das Betätigungselement mechanisch mit dem jeweiligen Gehäuse oder mit beiden Gehäusen oder mit der jeweiligen Neigungssensorik oder mit beiden Neigungssensoriken koppelt, so dass eine Bewegung des Betätigungselements zum Erzeugen der Lenkbetätigung in eine Bewegung zum Verändern der Neigung des jeweiligen Gehäuses oder der jeweiligen Neigungssensorik umgewandelt wird. Bemerkenswert ist, dass bereits eine sehr kleine Lageveränderung der Neigungssensorik zu einer signifikanten Beschleunigung bzw. Abbremsung des zugehörigen Rads führen kann. Dementsprechend beinhaltet die Kopplungseinrichtung eine entsprechende Übersetzung, um die relativ große manuelle Bewegung des Betätigungselements in eine entsprechend kleine Bewegung an der jeweiligen Neigungssensorik bewirkt.

Bei einer anderen Ausführungsform kann die Lenkeinrichtung zumindest einen elektrischen Stellantrieb aufweisen, mit dem die Neigung des jeweiligen Gehäuses oder der jeweiligen Neigungssensorik veränderbar ist. Ein derartiger elektrischer Stellantrieb weist insbesondere einen Elektromotor auf. Optional kann außerdem ein Getriebe vorhanden sein. Dementsprechend kann der Stellantrieb auch als Servomotor ausgestaltet sein. Die Lenkeinrichtung ist nun mit dem jeweiligen Stellantrieb elektrisch gekoppelt, derart, dass eine Lenkbetätigung der Lenkeinrichtung eine Ansteuerung des jeweiligen Stellantriebs zum Verändern der Neigung des jeweiligen Gehäuses oder der jeweiligen Neigungssensorik bewirkt. Hierdurch lässt sich die gewünschte Kopplung zwischen einer Eingangsseite der Lenkeinrichtung, an welcher der jeweilige Fahrer seinen Lenkwunsch in die Lenkeinrichtung einleiten kann, und dem jeweiligen Stellantrieb, der quasi eine Ausgangsseite der jeweiligen Lenkeinrichtung bildet, erheblich vereinfachen. Beispielsweise lassen sich an der Eingangsseite elektrische Steuersignale generieren, die über entsprechende Kabel an den jeweiligen Stellantrieb übertragen werden, der diese dann in damit korrelierende Bewegungen zum Verändern der Neigung des jeweiligen Gehäuses bzw. der jeweiligen Neigungssensorik umwandelt. Die Lenkeinrichtung kann hierzu eingangsseitig beispielsweise mit einem Joystick ausgestattet sein, dessen Knüppel manuell betätigbar ist, wobei eine Steuerelektronik des Joysticks dann die gewünschten Steuersignale erzeugt. Ebenso ist die Verwendung einer Lenkstange oder eines Lenkrads denkbar, wobei die Lenkstange bzw. das Lenkrad in einem Lenklager um eine Lenkachse drehbar gelagert ist. Am Lenklager kann eine Lenkwinkelsensorik angeordnet sein, die abhängig vom Lenkausschlag dann die erforderlichen elektrischen Steuersignale erzeugt.

Eine andere vorteilhafte Ausführungsform schlägt vor, dass das Zweirad-Fahrzeug außerdem mit einer Steuereinrichtung ausgestattet ist, mit der das Zweirad-Fahrzeug zum Beschleunigen und/oder zum Bremsen angesteuert werden kann. Ein derartiges dynamisch selbstbalancierendes Zweirad-Fahrzeug lässt sich zum Beschleunigen und Bremsen üblicherweise dadurch ansteuern, dass sich der Fahrer nach vorn bzw. nach hinten neigt, um so seinen Körperschwerpunkt und damit einhergehend den Gesamtschwerpunkt von Fahrzeug und Fahrer nach vorn bzw. nach hinten zu verlagern. Hierdurch wird eine Veränderung der Neigung der Neigungssensoriken um die Horizontalebene nach vorn bzw. nach hinten verändert, was über die jeweilige Balancesteuerung zu einer entsprechenden Beschleunigung bzw. Abbremsung der Räder führt. Stärker behinderten Fahrern oder körperlich schwachen Fahrern kann es schwer fallen, den Oberkörper nach vorn bzw. nach hinten zu neigen, um eine signifikante Schwerpunktveränderung herbeizuführen. Durch die Bereitstellung einer derartigen Steuereinrichtung zum Beschleunigen und/oder Bremsen des Zweirad-Fahrzeugs lässt sich das Fahrzeug unabhängig von einer Schwerpunktverlagerung des Fahrers zum Beschleunigen bzw. zum Bremsen ansteuern. Hierzu kann die Steuereinrichtung mit den Gehäusen oder mit den Neigungssensoriken so gekoppelt sein, dass eine Steuerbetätigung der Steuereinrichtung die Neigung beider Gehäuse oder beider Neigungssensoriken gleich verändert, so dass beide Rädern von den Balancesteuerungen zum synchronen Beschleunigen oder zum synchronen Bremsen angesteuert werden, um eine mit der Steuerbetätigung korrelierte Beschleunigung oder Bremsung des Zweirad-Fahrzeugs zu erzeugen. Hierdurch wird die Handhabung des Zweirad-Fahrzeugs erheblich vereinfacht. Insbesondere muss nur noch ein manuell vom Fahrer betätigbares Betätigungsorgan an der Eingangsseite der Steuereinrichtung bereitgestellt werden, die der sitzende Fahrer mit einer Hand betätigen kann, ohne hierzu seinen Oberkörper verlagern zu müssen.

Gemäß einer vorteilhaften Weiterbildung kann die Steuereinrichtung ein manuell betätigbares Betätigungselement zum Erzeugen der Steuerbetätigung aufweisen.

Darüber hinaus kann die Steuereinrichtung eine mechanische Kopplungseinrichtung aufweisen, die das Betätigungselement mechanisch mit den Gehäusen oder mit den Neigungssensoriken koppelt, so dass eine Bewegung des Betätigungselements zum Erzeugen der Steuerbetätigung in eine Bewegung zum Verändern der Neigung der beiden Gehäuse oder der beiden Neigungssensoriken wandelt.

Alternativ ist auch hier denkbar, dass die Steuereinrichtung wenigstens einen elektrischen Stellantrieb aufweist, mit dem die Neigung der beiden Gehäuse oder der beiden Neigungssensoriken gemeinsam veränderbar ist, wobei die Steuereinrichtung mit dem jeweiligen Stellantrieb elektrisch gekoppelt ist, so dass eine Steuerbetätigung der Steuereinrichtung eine Ansteuerung des jeweiligen Stellantriebs zum Verändern der Neigung der beiden Gehäuse oder der beiden Neigungssensoriken bewirkt. Auch hier ist denkbar, einen Joystick vorzusehen, dessen Knüppel manuell betätigbar ist und dessen Steuerelektronik die Steuersignale zum Ansteuern des jeweiligen Stellantriebs generiert. Über entsprechende Kabel kann das Betätigungselement dann mit dem jeweiligen Stellantrieb elektrisch gekoppelt sein.

Besonders vorteilhaft ist eine Weiterbildung, bei welcher die Steuereinrichtung und die Lenkeinrichtung ineinander integriert sind und so eine Lenk- und Steuereinrichtung bilden, die zum Lenken, zum Beschleunigen und zum Bremsen des Zweirad-Fahrzeugs betätigbar ist. Hierdurch wird der Aufbau des hier vorgestellten Zweirad-Fahrzeugs erheblich vereinfacht. Gleichzeitig wird auch die Handhabung des Zweirad-Fahrzeugs vereinfacht.

Eine besondere Weiterbildung schlägt vor, die Lenk- und Steuereinrichtung mit einem manuell betätigbaren Joystick auszustatten, der elektrisch mit dem jeweiligen Stellantrieb gekoppelt ist. Der Joystick weist einen manuell betätigbaren Knüppel auf und ist außerdem so konfiguriert, dass ein Bewegen des Knüppels nach links oder rechts einer Lenkbetätigung entspricht, während ein Bewegen des Knüppels nach vorn oder hinten einer Steuerbetätigung entspricht. Mit anderen Worten, der Joystick enthält eine Steuerelektronik, die Bewegungen des Knüppels nach links und rechts in Steuersignale für eine Lenkbetätigung des jeweiligen Stellantriebs wandelt und Bewegungen des Knüppels nach vorn und hinten in elektrische Steuersignale für eine Steuerbetätigung des jeweiligen Stellantriebs wandelt.

Alternativ oder zusätzlich zu einer solchen Steuereinrichtung kann das hier vorgestellte Zweirad-Fahrzeug bei einer vorteilhaften Ausführungsform außerdem mit einer Notbremseinrichtung zum Bremsen des Zweirad-Fahrzeugs ausgestattet sein. Diese Notbremseinrichtung ist mit den Gehäusen oder mit den Neigungssensoriken so gekoppelt, dass eine Betätigung der Notbremseinrichtung die Neigung beider Gehäuse oder beider Neigungssensoriken gleich verändert, derart, dass beide Räder von den Balancesteuerungen zum synchronen Bremsen angesteuert werden. Hierdurch lässt sich das Zweirad-Fahrzeug in einer Gefahrensituation leichter und schneller abbremsen, auch wenn der Fahrzeugführer selbst seinen Oberkörper nicht oder nur geringfügig nach hinten bewegen kann. Die Notbremseinrichtung kann insbesondere so konfiguriert sein, dass sie bei ihrer Betätigung ein automatisches Abbremsen des Zweirad-Fahrzeugs bis zum Stillstand bewirkt. Ferner kann die Notbremseinrichtung ein manuell betätigbares Betätigungselement aufweisen, beispielsweise in Form eines Nothalttasters oder Nothaltknopfs. Sofern ein Joystick vorhanden ist, kann der Knüppel des Joysticks als Betätigungselement der Notbremseinrichtung genutzt werden, indem der Knüppel nach unten, also in ein Joystick-Gehäuse hineingedrückt werden kann, oder indem der Joystick nach hinten über einen Druckpunkt hinaus betätigt wird oder ein Knopf auf dem Knüppel des Joysticks betätigt wird.

Zweckmäßig kann bei einer Ausführungsform vorgesehen sein, dass jedes Einrad-Fahrzeug eine im zugehörigen Gehäuse angeordnete Batterie mit zugehörigem Ladegerät aufweist, die insbesondere zur Stromversorgung des zugehörigen Elektromotors und der zugehörigen anderen elektrischen Komponenten, wie zum Beispiel Neigungssensorik und Balancesteuerung, dienen kann. Am Fahrgestell kann vorzugsweise eine gemeinsame Ladebuchse angeordnet sein, mit der die beiden Batterien der beiden Einrad-Fahrzeuge über die Ladegeräte gekoppelt sind, so dass über diese Ladebuchse beide Batterien gleichzeitig aufladbar sind. Dies vereinfacht das Aufladen des Zweirad-Fahrzeugs.

Eine andere vorteilhafte Ausführungsform schlägt vor, dass das Zweirad-Fahrzeug für jedes Einrad-Fahrzeug einen elektrischen Notlaufmotor aufweist, der mit dem zugehörigen Rad antriebsverbunden ist. Ferner ist der jeweilige Notlaufmotor mit dem zugehörigen Einrad-Fahrzeug so gekoppelt, dass bei einem Ausfall des Elektromotors der zugehörige Notlaufmotor das jeweilige Rad antreibt und/oder bremst. Das bedeutet, dass der jeweilige Notlaufmotor die Funktion des Elektromotors bei dessen Ausfall übernimmt. Dies kann dabei so erfolgen, dass der Ausfall des Elektromotors vom Fahrer nicht bemerkt wird. Insbesondere kann der Notlaufmotor permanent mit dem Rad antriebsverbunden sein und vom Elektromotor quasi mitgeschleppt werden. Ebenso ist denkbar, den jeweiligen Notlaufmotor stets parallel zum zugehörigen Elektromotor anzusteuern, so dass das zugehörige Rad im Normalfall von zwei Motoren gleichzeitig angetrieben wird. Bei Ausfall eines der beiden Motoren kann dann der jeweils andere Motor übernehmen. Hierdurch wird am jeweiligen Rad bzw. am jeweiligen Einrad-Fahrzeug eine vollständige Redundanz für den elektrischen Antrieb des Rads geschaffen. Die Ausfallsicherheit des Zweirad-Fahrzeugs wird dadurch erheblich verbessert.

Gemäß einer Weiterbildung kann dabei vorgesehen sein, dass der jeweilige Notlaufmotor von der Balancesteuerung des zugehörigen Einrad-Fahrzeugs gesteuert wird. Wenn der Elektromotor ausfällt, ist die zugehörige Balancesteuerung in der Regel noch voll funktionsfähig und kann daher zur Ansteuerung des Notlaufmotors genutzt werden. Auch hier ist grundsätzlich denkbar, dass die Balancesteuerung den Notlaufmotor und den Elektromotor permanent synchron ansteuert. Alternativ kann vorgesehen sein, dass die Balancesteuerung im Normalbetrieb nur den Elektromotor ansteuert und bei Ausfall des Elektromotors für einen Notbetrieb auf den Notlaufmotor umschaltet.

Alternativ ist eine Ausführungsform denkbar, bei der jedem Notlaufmotor eine eigene Neigungssensorik und eine eigene Balancesteuerung zugeordnet sind. Hierdurch wird ein vollständig autonomes Notlaufsystem bereitgestellt, das eine vollständige Redundanz für den Elektromotor, die Neigungssensorik und die Balancesteuerung des jeweiligen Einrad-Fahrzeugs bereitstellt. Auch diese Maßnahme erhöht signifikant die Ausfallsicherung bzw. Betriebssicherheit des Zweirad-Fahrzeugs.

Sofern der jeweilige Notlaufmotor über eine eigene Neigungssensorik verfügt, kann gemäß einer vorteilhaften Ausführungsform vorgesehen sein, dass die Neigungssensorik des jeweiligen Notlaufmotors gemeinsam mit der Neigungssensorik des zugehörigen Einrad-Fahrzeugs beweglich am Fahrgestell angeordnet ist, so dass sich deren Neigungen nur synchron verändern. Das bedeutet, dass das Notlaufsystem besonders einfach in das hier vorgestellte Zweirad-Fahrzeug integriert werden kann, da hierzu die Kopplung zwischen der jeweiligen Neigungssensorik und der Lenkeinrichtung bzw. der weiter oben beschriebenen Steuereinrichtung, Notbremseinrichtung und Lenk- und Steuereinrichtung, unverändert übernommen werden kann, da ein Verändern der Neigung der Neigungssensorik des Einrad-Fahrzeugs gleichzeitig dieselbe Neigungsveränderung an der Neigungssensorik des jeweiligen Notlaufmotors bewirkt.

Den beiden Notlaufmotoren kann gemäß einer vorteilhaften Ausführungsform eine gemeinsame Notlaufbatterie zugeordnet sein, die am Fahrgestell, also außerhalb der beiden Gehäuse angeordnet ist. Insbesondere kann dabei vorgesehen sein, dass auch diese Notlaufbatterie mit der vorstehend genannten Ladebuchse gekoppelt ist, so dass auch die Notlaufbatterie gleichzeitig mit den Batterien der Einrad-Fahrzeuge geladen werden kann. Es ist klar, dass auch für diese Notlaufbatterie ein entsprechendes Ladegerät vorhanden ist, so dass die Notlaufbatterie über dieses Ladegerät mit der Ladebuchse gekoppelt ist. Alternativ können für die beiden Notlaufmotoren auch separate Notlaufbatterien vorgesehen sein, die über separate Ladegeräte an die gemeinsame Ladebuchse angeschlossen sind.

Zur Realisierung der Kopplung des jeweiligen Notlaufmotors mit dem Rad kann gemäß einer vorteilhaften Ausführungsform das jeweilige Rad drehfest mit einem Zahnkranz verbunden sein, mit dem ein Antriebsritzel des Notlaufmotors kämmt. Die Verzahnungen des Zahnkranzes und des Antriebsritzels können gezielt so aufeinander abgestimmt sein, dass sich die Antriebsleistung des Elektromotors und die Antriebsleistung des Notlaufmotors am Rad synchronisieren lassen, so dass ein Umschalten vom Elektromotor auf den Notlaufmotor quasi stufenlos ohne Lastveränderung realisieren lässt.

Besonders vorteilhaft ist eine Weiterbildung, bei welcher die Neigungssensorik und die Balancesteuerung des jeweiligen Einrad-Fahrzeugs zu einer Balanceeinheit zusammengefasst sind. Insbesondere können hierzu die Balancesteuerung und die Neigungssensorik auf einer gemeinsamen Platine angeordnet und/oder in einem gemeinsamen Steuergehäuse angeordnet sein. Diese Balanceeinheit kann nun außerhalb des Gehäuses am Fahrgestell angeordnet sein. Die Neigung der gesamten Balanceeinheit führt dann zur synchronen Neigung der zugehörigen Neigungssensorik. Das bedeutet, dass zur Realisierung der hier vorgestellten Veränderung der Neigungssensorik eine Ausführungsform möglich ist, bei der die Balanceeinheit am Fahrgestell beweglich angeordnet ist, derart, dass sich die Neigung der Balanceeinheit um die Neigungsachse verändern lässt.

Eine andere Ausführungsform schlägt vor, dass das Gehäuse des jeweiligen Einrad-Fahrzeugs auf jeder Fahrzeugseite eine Montagestelle, z.B. eine Konsole mit Gewindeöffnungen, zum Montieren eines Trittbretts aufweist, auf dem beim ursprünglichen Einrad-Fahrzeug der Fahrer stehen kann. Ferner wird vorgeschlagen, dass zumindest eine dieser Montagestellen zum Befestigen des jeweiligen Gehäuses am Fahrgestell verwendet wird. Hierbei wird somit eine gegebenenfalls ohnehin vorhandene stabile Montagestelle genutzt, um das Gehäuse mit dem Fahrgestell fest zu verbinden.

Weiterhin wird optional vorgeschlagen, dass die beiden Einrad-Fahrzeuge jeweils über die einander zugewandten innenliegenden Montagestellen am Fahrgestell befestigt sind, wobei bei zumindest einem der Einrad-Fahrzeuge an der vom Fahrgestell abgewandten außenliegenden Montagestelle ein Abstellbrett befestigt ist. Hierbei wird eine Ladefläche bereitgestellt, beispielsweise um eine Aktentasche abzustellen. Dabei kann grundsätzlich das ursprünglich an Einrad-Fahrzeug vorhandene Trittbrett als Abstellbrett genutzt werden. Ferner kann vorgesehen sein, dass das Abstellbrett zwischen einer vertikalen Nichtgebrauchsstellung und einer horizontalen Gebrauchsstellung verstellbar ist. Falls das Abstellbrett nicht benötigt wird, kann es somit z.B. wegeklappt werden, um eine seitlich abstehende Störkontur zu vermeiden.

Gemäß einer anderen besonders vorteilhaften Ausführungsform kann eine Synchronisationseinrichtung vorgesehen sein, die mit den Balancesteuerungen der beiden Einrad-Fahrzeuge gekoppelt ist. Die Synchronisationseinrichtung bewirkt permanent eine Synchronisation der beiden Balancesteuerungen bei stehendem Zweirad-Fahrzeug und/oder bei Geradeausfahrt des Zweirad-Fahrzeugs, also bei fehlendem Lenkbefehl. Da die beiden Einrad-Fahrzeuge autonom sind, können geringfügige Herstellungstoleranzen und kleinste Lageabweichungen von einer theoretischen Idealposition zwischen dem jeweiligen Gehäuse und dem Fahrgestell zu ungleichen Raddrehgeschwindigkeiten und somit zu einer Kurvenfahrt des Zweirad-Fahrzeugs führen, obwohl über die Lenkeinrichtung kein Lenkbefehl erfolgt, so dass das Zweirad-Fahrzeug an sich geradeaus fahren sollte. Die permanente Synchronisation kann dies kompensieren und für eine optimale Geradeausfahrt sorgen. Sobald ein Lenkbefehl vorliegt, müssen die beiden Einrad-Fahrzeuge ohnehin asynchron betrieben werden, um die gewünschte Kurvenfahrt zu erzeugen, so dass sich dabei gegebenenfalls vorhandene Abweichungen der Raddrehgeschwindigkeiten nicht oder nur reduziert auswirken.

Sofern die Lenkeinrichtung mit dem wenigstens einen Stellantrieb ausgestattet ist, lässt sich auch eine Fernsteuerbarkeit des Zweirad-Fahrzeugs relativ einfach realisieren. Beispielsweise kann der jeweilige Stellantrieb mit einer Steuerung gekoppelt sein, die einen Empfänger aufweist. Eine Fernsteuereinrichtung ist mit einem entsprechenden Sender ausgestattet. Mithilfe der Fernsteuereinrichtung können nun Lenk- und andere Fahrbefehle vom Sender drahtlos zum Empfänger übertragen werden, die dann von der Steuerung zum Ansteuern des jeweiligen Stellantriebs genutzt werden. Dies kann über eine herkömmliche Funkverbindung oder auch über ein drahtloses Datennetz bzw. mobiles Internet realisiert werden.

Sofern das Zweirad-Fahrzeug fernsteuerbar ausgestaltet ist, kann auch eine autonome Fahrfunktion, insbesondere eine Folgefunktion, realisiert werden. Hierzu kann die vorstehend genannte Steuerung Positionskoordinaten, z.B. GPS-Koordinaten, verarbeiten. GPS steht dabei für Global Positioning System. Die Steuerung kann hierzu mit einer Positionserkennungseinrichtung ausgestattet sein, z.B. mit einer GPS-Einrichtung, und kennt daher die aktuelle Position des Zweirad-Fahrzeugs. Wenn nun von extern, z.B. über die Fernsteuereinrichtung, Zielkoordinaten vorgegeben werden, kann die Steuerung das Zweirad-Fahrzeug so steuern, dass es selbsttätig in Richtung zu den Zielkoordinaten fährt. Sofern die Fernsteuereinrichtung von einer Person mitgeführt wird, werden diese Zielkoordinaten permanent aktualisiert und das Zweirad-Fahrzeug kann der Person automatisch folgen. Beispielsweise lässt sich die Fernsteuereirichtung in ein Mobiltelefon integrieren, z.B. in Form einer App.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte Seitenansicht eines dynamisch selbstbalancierenden Zweirad-Fahrzeugs,
- Fig. 2: eine Frontansicht des Zweirad-Fahrzeugs,
- Fig. 3: eine weitere Frontansicht des Zweirad-Fahrzeugs, jedoch bei einer anderen Ausführungsform,
- Fig. 4: eine weitere Frontansicht des Zweirad-Fahrzeugs, jedoch bei einer weiteren Ausführungsform,
- Fig. 5: eine Seitenansicht des Zweirad-Fahrzeugs bei einer nicht erfindungsgemäßen Ausführungsform,
- Fig. 6: eine Seitenansicht des Zweirad-Fahrzeugs, jedoch bei einer anderen Ausführungsform,
- Fig. 7: eine schematische Prinzipdarstellung einer Lenkungskopplung des Fahrzeugs gemäß einer Ausführungsform.

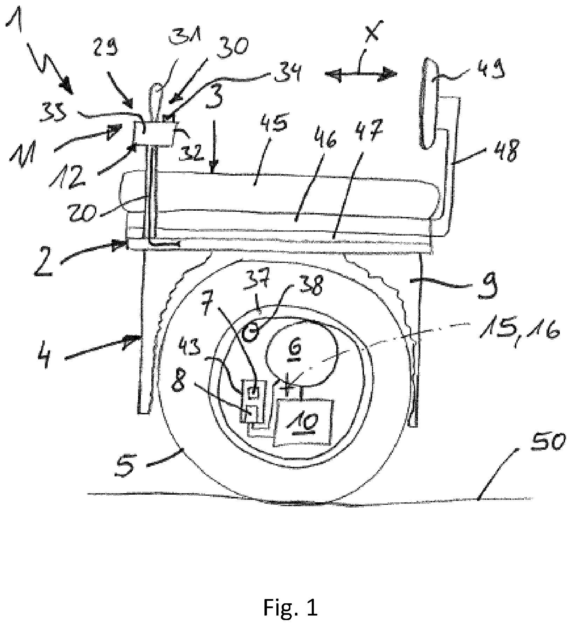

Gemäß den Figuren 1 bis 6 ist ein dynamisch selbstbalancierendes Zweirad-Fahrzeug 1 mit einem Fahrgestell 2 ausgestattet, das einen Fahrzeugsitz 3 trägt. Des Weiteren ist das Zweirad-Fahrzeug 1 mit zwei separaten, dynamisch selbstbalancierenden Einrad-Fahrzeugen 4 ausgestattet. Jedes dieser Einrad-Fahrzeuge 4 weist ein Rad 5, einen Elektromotor 6, eine Neigungssensorik 7, eine Balancesteuerung 8 und ein Gehäuse 9 auf. Zweckmäßig kann jedes der Einrad-Fahrzeuge 4 außerdem mit einer Batterie 10 ausgestattet sein. Zum Laden der jeweiligen Batterie 10 kann ferner ein hierzu geeignetes Ladegerät (nicht separat dargestellt) vorhanden sein, das eine vollautomatische Aufladung der jeweiligen Batterie 10 ermöglicht.

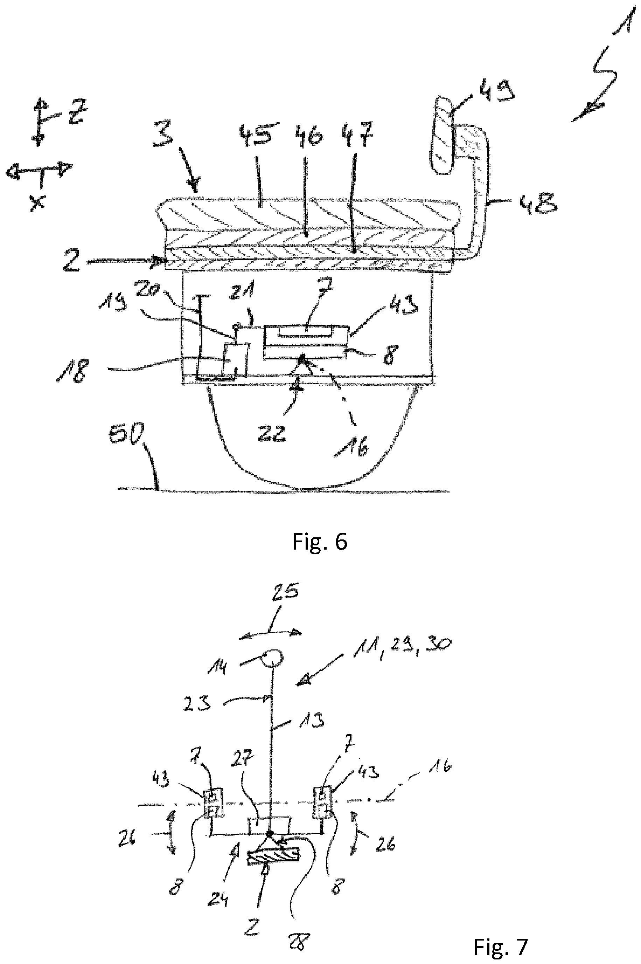

Das Zweirad-Fahrzeug 1 ist außerdem mit einer Lenkeinrichtung 11 ausgestattet, die zum Lenken des Zweirad-Fahrzeugs 1 konfiguriert ist. Gemäß den hier gezeigten Beispielen kann die Lenkeinrichtung 11 quasi eingangsseitig einen Joystick 12 aufweisen. Rein exemplarisch zeigt Figur 7 eine Ausführungsform, bei der die Lenkeinrichtung 11 eine Lenkstange 13 mit Handgriff 14 aufweist. Ebenso ist denkbar, die Lenkeinrichtung 11 mit einem drehbaren Lenkrad auszustatten.

Die beiden Einrad-Fahrzeuge 4 sind am Fahrgestell 2 so angeordnet, dass sie das Fahrgestell 2 tragen und ihre Räder 5 eine gemeinsame Raddrehachse 15 definieren. Das bedeutet, dass beide Räder 5 im Betrieb des Zweirad-Fahrzeugs um die gemeinsame Raddrehachse 15 drehen. Ferner stützen die Räder 5 das Zweirad-Fahrzeug 1 auf einem Untergrund oder Boden 50 ab.

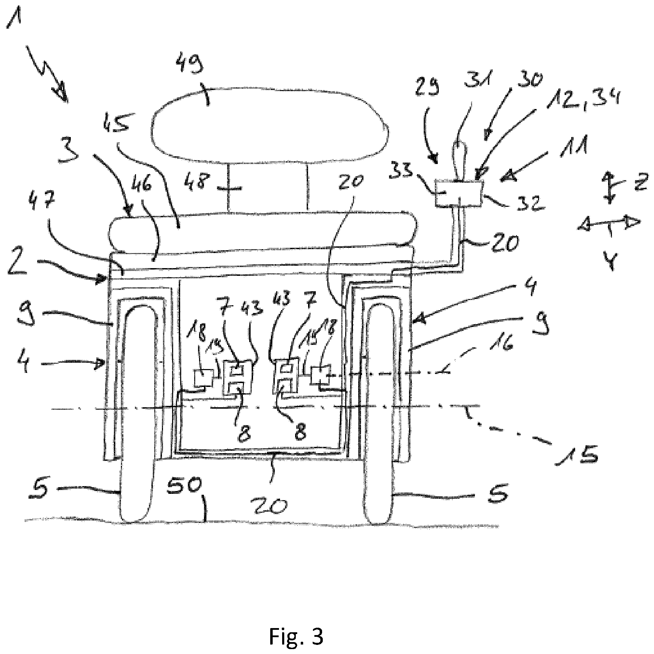

Die Lenkeinrichtung 11 ist bei den hier gezeigten Beispielen mit den beiden Neigungssensoriken 7 gekoppelt. Bei einer anderen, einfacheren Ausführungsform kann es ausreichend sein, die Lenkeinrichtung 11 nur mit einer der Neigungssensoriken 7 zu koppeln. Jedenfalls erfolgt diese Kopplung so, dass eine Lenkbetätigung der Lenkeinrichtung 11 eine Neigung von wenigstens einer dieser Neigungssensoriken 7 um eine in den Figuren 3 bis 7 angedeutete Neigungsachse 16 gegenüber dem Fahrgestell 2 verändert. Die Neigungsachse 16 ist dabei parallel zur Raddrehachse 15 ausgerichtet. Die Veränderung der Neigung der jeweiligen Neigungssensorik 7 um besagte Neigungsachse 16 erfolgt dabei so, dass das jeweilige Rad 5 von der zugehörigen Balancesteuerung 8 zum Beschleunigen oder zum Bremsen angesteuert wird, derart, dass dadurch eine mit der Lenkbetätigung korrelierte Lenkbewegung des Zweirad-Fahrzeugs 1 erzeugt wird. Auf die Art und Weise, wie eine derartige Kopplung der Lenkeinrichtung 11 mit den Gehäusen 9 bzw. den Neigungssensoriken 7 realisierbar ist, wird weiter unten noch näher eingegangen.

Für eine ausreichende Agilität des Zweirad-Fahrzeugs 1 kann gemäß einer ersten Ausführungsform vorgesehen sein, die Lenkeinrichtung 11 bzw. deren Kopplung so zu konfigurieren, dass eine Lenkbetätigung der Lenkeinrichtung 11 nur die Neigung der dem kurvenäußeren oder kurveninneren Rad 5 zugeordneten Neigungssensorik 7 zu verändern, derart, dass das kurvenäußere Rad 5 beschleunigt wird oder das kurveninnere Rad 5 abgebremst wird. Wird dagegen eine höhere Agilität beim Lenkverhalten gewünscht, kann gemäß einer anderen Ausführungsform die Lenkeinrichtung 11 bzw. deren Kopplung so konfiguriert sein, dass bei fahrendem Zweirad-Fahrzeug 2 eine Lenkbetätigung der Lenkeinrichtung 11 die Neigungen beider Neigungssensoriken 7 so verändert, dass das kurvenäußere Rad 5 beschleunigt wird, während das kurveninnere Rad 5 abgebremst wird. Hierdurch lässt sich der Kurvenradius signifikant reduzieren.

Ferner kann zur Realisierung einer hohen Agilität bei stehendem Zweirad-Fahrzeug 2 die Lenkeinrichtung 2 bzw. deren Kopplung so konfiguriert sein, dass eine Lenkbetätigung der Lenkeinrichtung 11 die Neigungen der beiden Neigungssensoriken 7 entgegengesetzt verändert, so dass das eine Rad 5 nach vorn antreibt, während das andere Rad 5 nach hinten antreibt. Hierdurch lässt sich das stehende Zweirad-Fahrzeug 1 quasi auf der Stelle um eine vertikale zentrale Hochachse drehen.

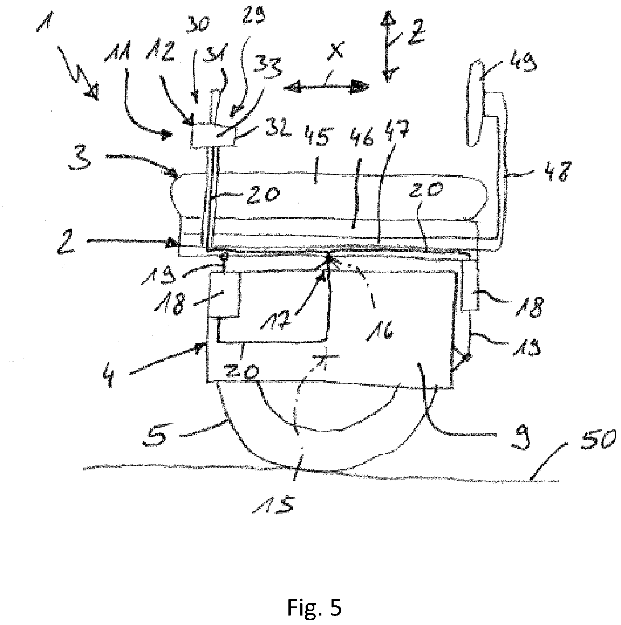

Gemäß der in Figur 5 angedeuteten, nicht erfindungsgemäßen Ausführungsform kann das jeweilige bzw. können beide Gehäuse 5 der beiden Einrad-Fahrzeuge 4 am Fahrgestell 2 beweglich angebracht sein, derart, dass die Neigung des jeweiligen Gehäuses 9 gegenüber dem Fahrgestell 2 veränderbar ist. In Figur 5 ist eine derartige Anordnung durch eine Lagerstelle 17 angedeutet. Die Lagerstelle 17 definiert die Neigungsachse 16. Im Beispiel der Figur 5 ist die Lagerstelle 17 so angeordnet, dass sich die Neigungsachse 16 im ausbalancierten Zustand vertikal oberhalb der Raddrehachse 15 befindet. Bei einer anderen Ausführungsform kann die Lagerstelle 17 in der Längsachse X des Fahrzeugs 1 nach hinten oder nach vorn und in der Z-Achse nach unten, z.B. auf Höhe der Raddrehachse 16 der Einrad-Fahrzeuge4, versetzt angeordnet sein.

Bei dieser nicht erfindungsgemäßen Ausführungsform ist die jeweilige Neigungssensorik 7 wie in Figur 1 angedeutet am oder im zugehörigen Gehäuse 9 befestigt. In der Folge verändert sich die Neigung der Neigungssensorik 7 gemeinsam mit der Neigung des jeweiligen Gehäuses 9. Die Lenkeinrichtung 11 ist bei dieser nicht erfindungsgemäßen Ausführungsform mit dem oder den Gehäusen 9 so gekoppelt, dass eine Lenkbetätigung der Lenkeinrichtung 11 die Neigung von wenigstens einem der Gehäuse 9 verändert. Beispielsweise kann die Lenkeinrichtung 11 hierzu einen elektrischen Stellantrieb 18 aufweisen, der einerseits mit dem jeweiligen Gehäuse 9 und andererseits mit dem Fahrgestell 2 verbunden ist. Im Beispiel der Figur 5 sind rein exemplarisch zwei derartige Stellantriebe 18 dargestellt, die unterschiedliche Einbausituationen repräsentieren, die zweckmäßig alternativ realisiert werden. Im Beispiel ist der vordere Stellantrieb 18 am jeweiligen Gehäuse 9 befestigt und über ein Stellglied 19 mit dem Fahrgestell 2 verbunden. Das Stellglied 19 lässt sich aus dem übrigen Stellantrieb 18 ausfahren bzw. einfahren, wodurch die Neigung zwischen Gehäuse 9 und Fahrgestell 2 verändert werden kann. Beim hinteren Stellantrieb 18 ist der Stellantrieb 18 am Fahrgestell 2 befestigt, während das Stellglied 19 mit dem Fahrgestell 9 verbunden ist. Auch hier führt das Einfahren bzw. Ausfahren des Stellglieds 19 bezüglich des übrigen Stellantriebs 18 zu einer Neigungsverstellung des Gehäuses 9 gegenüber dem Fahrgestell 2. Die Kopplung der Lenkeinrichtung 11 mit dem jeweiligen Stellantrieb 18 erfolgt zweckmäßig über Steuerleitungen 20. Die Steuerleitungen 20 sind im Beispiel an den Joystick 12 angeschlossen. Hierdurch wird quasi eine elektrische Kopplung zwischen der Lenkeinrichtung 11 und dem jeweiligen Stellantrieb 18 realisiert.

Die Figuren 3, 4 und 6 zeigen erfindungsgemäße Ausführungsformen, bei denen das jeweilige Gehäuse 9 der beiden Einrad-Fahrzeuge 4 jeweils fest am Fahrgestell 2 angebracht ist, so dass sich das Gehäuse 9 nicht mehr um die Neigungsachse 16 gegenüber dem Fahrgestell 2 verdrehen kann. Die Gehäuse 9 sind demnach bezüglich der Neigungsachse 16 drehfest am Fahrgestell 2 angebracht. Bei diesen Ausführungsformen sind die beiden Neigungssensoriken 7 aus dem jeweiligen Gehäuse 9 ausgebaut bzw. außerhalb des jeweiligen Gehäuses 9 am Fahrgestell 2 angebracht. Grundsätzlich kann ausreichend sein, nur eine der beiden Neigungssensoriken 7 aus dem Gehäuse 9 auszubauen und am Fahrgestell 2 anzubringen. Dennoch wird hier bevorzugt die Variante beschrieben, bei der beide Neigungssensoriken 7 aus den beiden Gehäusen 4 ausgebaut und am Fahrgestell 2 angebracht sind. Die Anbringung der jeweiligen Neigungssensorik 7 am Fahrgestell 2 erfolgt dabei beweglich, derart, dass sich die Neigung der jeweiligen Neigungssensorik 7 um die Neigungsachse 16 verändern lässt. Die Lenkeinrichtung 11 ist dann mit den Neigungssensoriken 7 so gekoppelt, dass eine Lenkbetätigung der Lenkeinrichtung 11 die Neigung von wenigstens einer der Neigungssensoriken 7 verändert.

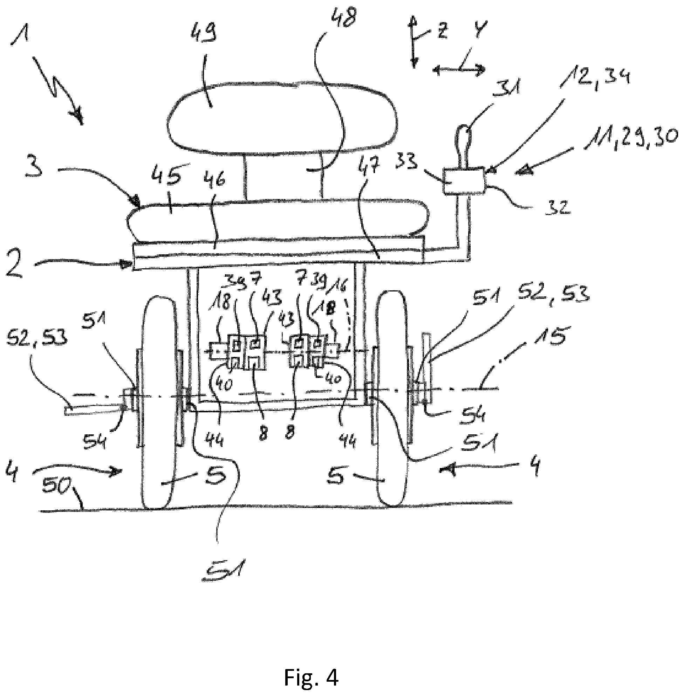

Gemäß den Figuren 3, 4 und 6, die unterschiedliche Ausführungsformen zeigen, kann die Lenkeinrichtung 11 wie vorstehend schon zur Variante der Figur 5 beschrieben mit wenigstens einem elektrischen Stellantrieb 18 ausgestattet sein, mit dessen Hilfe die Neigung der jeweiligen Neigungssensorik 7 um die Neigungsachse 16 bezüglich des Fahrgestells 2 verändert werden kann. In den Beispielen der Figuren 3 und 4 sind zwei derartige Stellantriebe 18 erkennbar, die je einer Neigungssensorik 7 zugeordnet sind. Das zugehörige Stellglied 19, das in Fig. 4 nicht gezeigt ist, ist auf geeignete Weise mit der jeweiligen Neigungssensorik 7 gekoppelt, um deren Neigung um die Neigungsachse 16 zu verändern. In den Beispielen der Figuren 3 und 4 kann der Stellantrieb 18 das Stellglied 19 um dessen Längsmittelachse verdrehen, wobei diese Drehbewegung direkt oder indirekt auf die zugehörige Neigungssensorik 7 übertragen wird, was die gewünschte Veränderung der Neigung der Neigungssensorik 9 um die Neigungsachse 16 bewirkt. Der Stellantrieb 18 kann ein Getriebe aufweisen, insbesondere ein Planetengetriebe, um relativ kleine Drehlagenveränderungen der jeweiligen Neigungssensorik 7 mit hoher Zuverlässigkeit einstellen zu können. Im Beispiel der Figur 6 ist dagegen wieder ein Stellglied 19 vorgesehen, das aus dem übrigen Stellantrieb 18 ausfahrbar bzw. darin einfahrbar ist und das über einen entsprechenden Hebelarm 21 direkt oder indirekt mit der jeweiligen Neigungssensorik 7 gekoppelt ist. In Figur 6 ist außerdem eine Lagerstelle 22 angedeutet, über welche letztlich die jeweilige Neigungssensorik 7 um die Neigungsachse 16 drehbar am Fahrgestell 2 gelagert ist. Die Lagerstelle 22 definiert hierbei die Neigungsachse 16. Auch hier wird eine elektrische Kopplung bevorzugt, die wieder mit elektrischen Leitungen 20 realisierbar ist, die eingangsseitig der Lenkeinrichtung 11 an den Joystick 12 und ausgangsseitig der Lenkeinrichtung 11 an den jeweiligen Stellantrieb 18 angeschlossen sind. Die Leitungen 20 können dabei innerhalb des Fahrgestells 2, insbesondere innerhalb eines Tragrahmens des Fahrgestells 2 geschützt verlegt sein. In Fig. 4 sind diese Leitungen 20 nicht gezeigt.

Rein exemplarisch zeigt Figur 7 eine andere Ausführungsform, bei der die Lenkeinrichtung 11 mit der Lenkstange 13 und dem Griff 14 ein manuell betätigbares Betätigungselement 23 aufweist, das zum Erzeugen der Lenkbetätigung dient und dadurch die Eingangsseite der Lenkeinrichtung 11 bildet. Die Lenkeinrichtung 11 ist hier außerdem mit einer mechanischen Kopplungseinrichtung 24 ausgestattet, die so konfiguriert ist, dass sie das Betätigungselement 23 mechanisch mit den Neigungssensoriken 7 verbindet. Die Kopplungseinrichtung 24 wandelt eine in Figur 7 durch einen Doppelpfeil angedeutete Bewegung 25 des Betätigungselements 23 in eine in Figur 7 durch Doppelpfeile angedeutete Bewegung 26 an der jeweiligen Neigungssensorik 7 um, die dann die gewünschte Veränderung der Neigung der jeweiligen Neigungssensorik 7 um die Neigungsachse 16 bewirkt. Soll das Fahrzeug 1 beispielsweise nach links gelenkt werden, betätigt der Fahrer das Betätigungselement 23 so, dass sich das Betätigungselement 23 relativ zum Fahrgestell 2 nach links bewegt. In der Folge wird über die Kopplungseinrichtung 24 die Neigung zumindest der rechten Neigungssensorik 7 verändert, derart, dass das zugehörige Rad 5, welches das kurvenäußere Rad repräsentiert, beschleunigt wird. Bei fahrendem Fahrzeug 1 kann zusätzlich oder alternativ vorgesehen sein, dass dabei gleichzeitig die dem kurveninneren Rad 5, also hier dem linken Rad 5 zugeordnete Neigungssensorik 7 ebenfalls hinsichtlich ihrer Neigung um die Neigungsachse 16 verändert wird, jedoch dahingehend, dass das linke Rad abgebremst wird.

Die Kopplungseinrichtung 24 kann eine Getriebeeinrichtung 27 aufweisen, um die relativ grobe Bewegung 25 am Betätigungselement 23, die im Zentimeter-Bereich liegen kann, in eine relativ feine Bewegung 26 an der jeweiligen Neigungssensorik 7 übersetzt, die im Millimeter-Bereich bzw. im Mikrometer-Bereich liegen kann, so dass die Neigung nur wenige Grad bzw. nur um wenige Winkelminuten bzw. nur um wenige Winkelsekunden verändert wird. Die Kopplungseinrichtung 24 kann beispielsweise wieder über eine geeignete Lagerstelle 28 am Fahrgestell 2 abgestützt bzw. gelagert sein.

Bei den hier gezeigten Ausführungsbeispielen kann das Zweirad-Fahrzeug 1 außerdem mit einer Steuereinrichtung 29 ausgestattet sein, mit deren Hilfe das Zweirad-Fahrzeug 1 beschleunigt bzw. gebremst werden kann. Insbesondere kann diese Steuereinrichtung 29 wieder einen Joystick 12 aufweisen. Besonders vorteilhaft ist dabei eine Ausführungsform, bei welcher die Steuereinrichtung 29 und die Lenkeinrichtung 11 ineinander integriert sind und dadurch eine Lenk- und Steuereinrichtung 30 bilden. Auch diese Lenk- und Steuereinrichtung 30 kann mit einem Joystick 12 ausgestattet sein. Die Figuren 1 bis 5 zeigen diese bevorzugte Ausführungsform, bei der die Lenkeinrichtung 11 und die Steuereinrichtung 29 zur Lenk- und Steuereinrichtung 30 integriert sind und einen gemeinsamen Joystick 12 aufweisen. Mit Hilfe der Lenk- und Steuereinrichtung 30 lässt sich somit das Fahrzeug 1 zum Lenken, zum Beschleunigen und zum Bremsen ansteuern.

Sofern das Zweirad-Fahrzeug 1 mit einer solchen Steuereinrichtung 29 oder mit einer solchen Lenk- und Steuereinrichtung 30 ausgestattet ist, sind beide Neigungssensoriken 7 um die Neigungsachse 16 schwenkbar am Fahrgestell 2 angeordnet. Ist dagegen nur die Lenkeinrichtung 11 realisiert, reicht es grundsätzlich aus, nur eine der Neigungssensoriken 7 um die Neigungsachse 16 schwenkbar am Fahrgestell 2 anzuordnen.

Die Steuereinrichtung 29 bzw. die Lenk- und Steuereinrichtung 30 kann demnach wieder ein manuell betätigbares Betätigungselement, zum Beispiel in Form des Joysticks 12 oder aber gemäß Figur 7 in Form der Lenkstange 13 mit Griff 14 aufweisen. Ferner kann wie in Figur 7 eine mechanische Kopplungseinrichtung 24 vorgesehen sein, um die Steuereinrichtung 29 bzw. die Lenk- und Steuereinrichtung 30 auf geeignete Weise mit den Neigungssensoriken 7 zu koppeln. Bevorzugt ist jedoch gemäß den Figuren 1 bis 6 eine elektrische Kopplung über entsprechende Steuerleitungen 20, um analog zur Lenkeinrichtung 11 die Stellantriebe 18 ansteuern zu können.

Während zum Lenken des Fahrzeugs 1 die beiden Neigungssensoriken 7 asymmetrisch um die Neigungsachse 16 geneigt werden, insbesondere kann es zum Lenken ausreichen, nur eine Neigungssensorik 7 zu neigen, erfolgt zum Beschleunigen bzw. zum Bremsen des Fahrzeugs 1 eine symmetrische Veränderung der Neigung beider Neigungssensoriken 7. Es ist klar, dass grundsätzlich auch beliebige Mischformen realisierbar sind, um das Fahrzeug 1 auch während eines Beschleunigungsvorgangs oder während eines Bremsvorgangs lenken zu können.

Sofern wie bei den Beispielen der Figuren 1 bis 5 ein Joystick 12 vorgesehen ist, weist dieser in üblicher Weise einen manuell betätigbaren Knüppel 31 auf, der an einem Joystick-Gehäuse 32 beweglich gelagert ist und mit dem eine Steuerelektronik 33 betätigt wird, die im Joystick-Gehäuse 32 angeordnet ist. Der Joystick 12 bzw. die Steuerelektronik 33 ist über die Leitungen 20 mit den Stellantrieben 18 verbunden.

Zur Realisierung der Lenkeinrichtung 11 ist der Joystick 12 so konfiguriert, dass ein Bewegen des Knüppels 31 nach links oder rechts einer Lenkbetätigung entspricht. Zur Realisierung der Steuereinrichtung 29 ist der Joystick 12 dagegen so konfiguriert, dass ein Bewegen des Knüppels 31 nach vorn oder nach hinten einer Steuerbetätigung entspricht. Es ist klar, dass zur Realisierung der Lenk- und Steuereinrichtung 30 der Joystick 12 entsprechend konfiguriert ist, so dass sich das Fahrzeug 1 durch entsprechende Bewegungen des Knüppels 31 lenken, beschleunigen und bremsen lässt.

Das hier vorgestellte Fahrzeug 1 kann optional mit einer Notbremseinrichtung 34 ausgestattet sein, die ein Abbremsen des Fahrzeugs 1 unterstützt. Diese Notbremseinrichtung 34 kann dabei in den Joystick 12 integriert sein oder einen bezüglich der Lenkeinrichtung 11 separaten Taster aufweisen. In Fig. 1 ist ein solcher Taster am Joystick-Gehäuse 32 vorgesehen. Die Notbremseinrichtung 34 ist nun wieder wie die zuvor beschriebene Steuereinrichtung 29 mit den Neigungssensoriken 7 gekoppelt, derart, dass eine Betätigung der Notbremseinrichtung 34 die Neigung beider Neigungssensoriken 7 gleich verändert, nämlich so, dass beide Räder 5 von den Balancesteuerungen 8 zum synchronen Bremsen angesteuert werden. Insbesondere kann die Notbremseinrichtung 34 so ausgestaltet bzw. mit den Balancesteuerungen 8 gekoppelt sein, dass bei ihrer Betätigung das Fahrzeug 1 bis zum Stillstand abgebremst wird. Beispielsweise kann mit Hilfe der Notbremseinrichtung 34 hierzu den Balancesteuerungen 8 eine Fehlermeldung übertragen, die innerhalb des jeweiligen Einrad-Fahrzeugs 4 ohnehin ein Abbremsen des Einrad-Fahrzeugs 4 bis zum Stillstand auslöst.

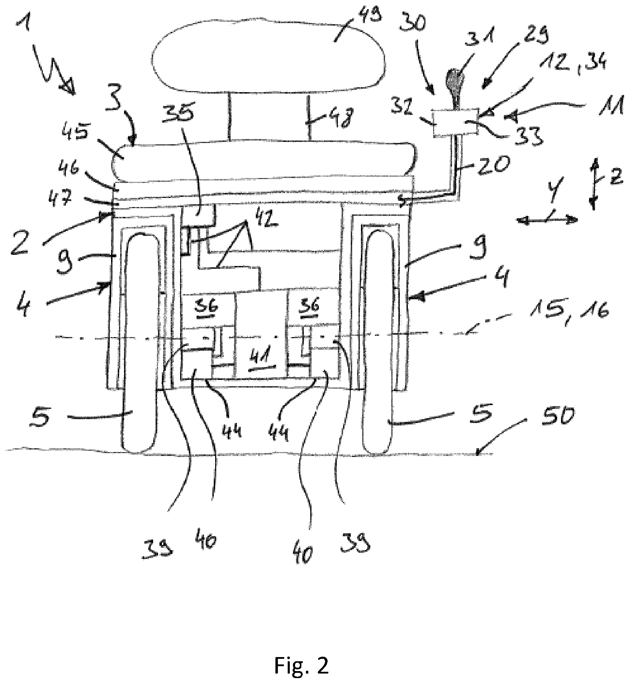

Gemäß Figur 2 kann am Fahrgestell 2 eine gemeinsame Ladebuchse 35 angeordnet sein, mit der die Batterien 10 der beiden Einrad-Fahrzeuge 4 elektrisch gekoppelt sind, zweckmäßig über die zugehörigen Ladegeräte. Somit lassen sich beiden Batterien 10 der Einrad-Fahrzeuge 4 über diese Ladebuchse 35 gleichzeitig aufladen. Dies vereinfacht die Handhabung des Fahrzeugs 1.

Gemäß Figur 2 kann das Zweirad-Fahrzeug 1 bei einer besonders vorteilhaften Ausführungsform für jedes Einrad-Fahrzeug 4 einen elektrischen Notlaufmotor 36 aufweisen, der mit dem zugehörigen Rad 5 antriebsverbunden ist. Beispielsweise kann das jeweilige Rad 5 gemäß Figur 1 drehfest mit einem Zahnkranz 37 verbunden sein, mit dem nun ein in Figur 1 angedeutetes Antriebsritzel 38 des jeweiligen Notlaufmotors 36 kämmt. Dieser Zahnkranz 37 kann am Rad 5 zur Realisierung der Antriebskopplung mit dem Notlaufmotor 36 zusätzlich vorgesehen sein. Ebenso ist denkbar, einen am Rad 5 ohnehin bereits vorhandenen Zahnkranz 37, der an sich zur Antriebskopplung mit dem jeweiligen Elektromotor 6 dient, gleichzeitig zum Koppeln mit dem Notlaufmotor 36 zu nutzen.

Wenn nun während des Fahrbetriebs bei einem der Einrad-Fahrzeuge 4 der Elektromotor 6 ausfällt, kann der zugehörige Notlaufmotor 36 dessen Antriebsfunktion quasi nahtlos übernehmen, so dass am betroffenen Rad 5 quasi keine Leistungsunterbrechung spürbar wird. Hierzu kann im Notfall der jeweilige Notlaufmotor 36 aktiviert werden. Ebenso ist denkbar, das jeweilige Rad 5 permanent gleichzeitig mit dem Elektromotor 6 des Einrad-Fahrzeugs 4 und mit dem Notlaufmotor 36 anzutreiben.

Grundsätzlich ist denkbar, den jeweiligen Notlaufmotor 36 mit Hilfe der ohnehin vorhandenen Balancesteuerung 8 des jeweiligen Einrad-Fahrzeugs 4 zu steuern. Figur 2 zeigt jedoch eine bevorzugte Ausführungsform, bei der jedem Notlaufmotor 36 eine eigene Neigungssensorik 39 und eine eigene Balancesteuerung 40 zugeordnet ist, so dass für jedes Rad 5 zwei unabhängige, selbsttätige elektromotorische Antriebe zur Verfügung stehen, wodurch eine vollständige Redundanz des Antriebs gewährleistet ist, welche insbesondere für Menschen mit einer Gehbehinderung von höchster Bedeutung ist.

Die beiden Notlaufmotoren 36 sind auf geeignete Weise am Fahrgestell 2 montiert. Die zugehörige separate Neigungssensorik 39 kann gemäß Fig. 4 zweckmäßig mit der Neigungssensorik 7 des zugeordneten Einrad-Fahrzeugs 4 so verbunden sein, dass beide Neigungssensoriken 7, 39 simultan bzw. gleichförmig gegenüber der Neigungsachse 16 geneigt werden können. Dies hat zur Folge, dass sich die Neigung der Neigungssensorik 39 des jeweiligen Notlaufmotors 36 stets identisch zur Neigung der Neigungssensorik 7 des zugehörigen Einrad-Fahrzeugs 4 verändert. Dies hat ebenfalls zur Folge, dass alle vorstehend beschriebenen Varianten zur Realisierung der Lenkeinrichtung 11, der Steuereinrichtung 29, der Lenk- und Steuereinrichtung 30 und auch der Notbremseinrichtung 34 unverändert auch in Verbindung mit den Notlaufmotoren 36 realisierbar sind.

Für die elektrische Energieversorgung der Notlaufmotoren 36 kann grundsätzlich die Batterie 10 des jeweiligen Einrad-Fahrzeugs 4 herangezogen werden. Bevorzugt ist jedoch eine separate Batterie 41, die hierzu am Fahrgestell 2 angebracht ist. Zweckmäßig kann auch diese weitere Batterie 41 über ein entsprechendes Ladegerät (nicht separat dargestellt) mithilfe der gemeinsamen Ladebuchse 35 gleichzeitig mit den Batterien 10 der Einrad-Fahrzeuge 4 über deren Ladegeräte aufgeladen werden. Alle Batterien 10, 41 bzw. Ladegeräte sind über entsprechende Ladeleitungen 42 mit der Ladebuchse 35 gekoppelt. Zur vereinfachten Darstellung sind hier die Ladegeräte in die jeweilige Batterie 10, 41 integriert gezeigt. Eine separate Anordnung ist ebenso denkbar.

Bei allen hier gezeigten Beispielen ist entsprechend einer vorteilhaften Ausführungsform vorgesehen, dass die jeweilige Neigungssensorik 7 und die zugehörige Balancesteuerung 8 des jeweiligen Einrad-Fahrzeugs 4 zu einer Balanceeinheit 43 zusammengefasst sind. Insbesondere kann hierzu vorgesehen sein, dass eine gemeinsame Platine vorgesehen ist, die einerseits die jeweilige Neigungssensorik 7 und andererseits die zugehörige Balancesteuerung 8 trägt. Dementsprechend wird zum Verändern der Neigung der jeweiligen Neigungssensorik 7 bei allen hier gezeigten Ausführungsformen bevorzugt die Neigung der Balanceeinheit 43 gegenüber dem Fahrgestell 2 verändert, wodurch sich dann selbstverständlich auch die Neigung der Neigungssensorik 7 bezüglich des Fahrgestells 2 verändert. Das bedeutet, dass die Neigungsänderung der Neigungssensorik 7 bei den hier beschriebenen Ausführungsformen gleichbedeutend ist zu einer Neigungsveränderung der Balanceeinheit 43, welche die Neigungssensorik 7 und die Balancesteuerung 8 umfasst.

Entsprechendes gilt dann auch für die Neigungssensorik 39 und die Balancesteuerung 40 des jeweiligen Notlaufmotors 36. Auch hier kann eine Balancesteuerung 44 vorgesehen sein, welche die jeweilige Neigungssensorik 39 und die zugehörige Balancesteuerung 40 umfasst. Zweckmäßig kann gemäß Fig. 4 vorgesehen sein, dass für jedes Einrad-Fahrzeug 4 die Balanceeinheit 43 zum Steuern des zugehörigen Elektromotors 6 und die Balanceeinheit 44 zum Steuern des zugehörigen Notlaufmotors 36 fest miteinander verbunden sind und stets gleichförmig gegenüber dem Fahrgestell 2 um die Neigungsachse 16 geneigt werden können.

Gemäß den Figuren 1 bis 6 umfasst der Fahrzeugsitz 3 ein Sitzpolster 45 und einen Sitzträger 46, der das Sitzpolster 45 trägt und der seinerseits auf einem optionalen Schienensystem 47 parallel zur Fahrzeuglängsachse X verstellbar angeordnet sein kann. Das Schienensystem 47 ist dabei am Fahrgestell 2 befestigt und ermöglicht somit eine Längsverstellung des Sitzkissens 45 relativ zum Fahrgestell 2, wodurch es dem Fahrer leichter möglich ist, seinen Schwerpunkt nach vorn bzw. nach hinten zu verlagern. Am Sitzträger 46 ist hier außerdem eine Rückenlehne 48 mit Rückenpolster 49 angeordnet. Ferner können hier nicht gezeigte Armlehnen vorgesehen sein. Darüber hinaus können am Fahrgestell 2 Stützen angeordnet sein, die elektrisch oder mechanisch ausfahrbar sind, um das Zweirad-Fahrzeug 1 sicher parken zu können. Außerdem können ein Kippschutz nach vorn und/oder ein Kippschutz nach hinten vorgesehen sein, um ein Kippen des Fahrgestells 2 um die Raddrehachse 15 über einen vorbestimmten Grenzwinkel hinaus zu verhindern.

In den Beispielen der Fig. 2 und 3 ist das Fahrgestell 2 an den beiden Gehäusen 9 bezüglich der Querachse Y zentrisch bzw. mittig abgestützt. Im Unterschied dazu zeigt Fig. 4 ein Beispiel mit bezüglich der Querrichtung Y exzentrischer Abstützung bzw. Anbindung des Fahrgestells 2 an den Gehäusen 9. Beispielsweise kann das Gehäuse 9 des jeweiligen Einrad-Fahrzeugs 4 auf jeder Fahrzeugseite eine Montagestelle 51 zum Montieren eines Trittbretts 52 aufweisen. Grundsätzlich können die in den Fig. 2 und 3 gezeigten Beispiele die baugleichen Einrad-Fahrzeuge 4 aufweisen wie das in Fig. 4 gezeigte Beispiel und demnach ebenfalls solche Montagestellen 51 besitzen.

Gemäß Fig. 4 kann nun zweckmäßig vorgesehen sein, dass zumindest eine dieser Montagestellen 51 zum Befestigen des jeweiligen Gehäuses 9 am Fahrgestell 2 verwendet wird. Beispielsweise werden hier jeweils die an den einander zugewandten Innenseiten angeordneten innenliegenden Montagestellen 51 verwendet, um das jeweilige Gehäuse 9 mit dem Fahrgestellt 2 fest zu verbinden. Diese Verbindung erfolgt dabei drehfest bezüglich der Neigungsachse 16. Die Montagestelle 51 kann zu diesem Zweck Gewindeöffnungen enthalten, in welche Schrauben zum Befestigen des Fahrgestells 2 am jeweiligen Gehäuse 9 eingeschraubt werden können. Somit wird das Fahrgestell 2 anstelle der Trittbretter 52 an den innenliegenden Montagestellen 51 befestigt.

Im Unterschied dazu ist es gemäß Fig. 4 möglich, an wenigstens einer der voneinander abgewandten außenliegenden Montagestellen 51 ein Abstellbrett 53 zu befestigen. Besonders zweckmäßig kann das ohnehin an dieser Stelle vorgesehene Trittbrett 52 als Abstellbrett 53 dienen. Ferner ist hier vorgesehen, dass sich das Abstellbrett 53 zwischen vertikalen Nichtgebrauchsstellung und einer horizontalen Gebrauchsstellung verstellen, insbesondere umklappen, lässt. In Fig. 4 ist auf jeder Fahrzeugseite des Zweirad-Fahrzeugs 1 jeweils ein solches Abstellbrett 53 außen am Gehäuse 9 angebracht. In Fig. 4 ist das linke Abstellbrett 53 in der herunter- oder ausgeklappten Gebrauchsstellung wiedergegeben, während das rechte Abstellbrett 53 die hoch- oder eingeklappte Nichtgebrauchsstellung einnimmt. Ein Scharnier, das das Umklappen um eine parallel zur Längsachse X erlaubt, ist dabei mit 54 bezeichnet.

## Patentansprüche

1. Dynamisch selbstbalancierendes Zweirad-Fahrzeug (1)
- mit einem Fahrgestell (2), das einen Fahrzeugsitz (3) trägt,
- mit zwei dynamisch selbstbalancierenden Einrad-Fahrzeugen (4), die jeweils ein Rad (5), einen Elektromotor (6), eine Neigungssensorik (7), eine Balancesteuerung (8) und ein Gehäuse (9) aufweisen,
- mit einer Lenkeinrichtung (11) zum Lenken des Zweirad-Fahrzeugs (1),
- wobei die beiden Einrad-Fahrzeuge (4) so am Fahrgestell (2) angeordnet sind, dass sie das Fahrgestell (2) tragen und ihre Räder (5) eine gemeinsame Raddrehachse (15) definieren,
- wobei die Lenkeinrichtung (11) mit zumindest einer der Neigungssensoriken (7) so gekoppelt ist, dass eine Lenkbetätigung der Lenkeinrichtung (11) eine Neigung von wenigstens einer der Neigungssensoriken (7) um eine parallel zur Raddrehachse (15) verlaufenden Neigungsachse (16) gegenüber dem Fahrgestell (2) so verändert, dass das jeweilige Rad (5) von der zugehörigen Balancesteuerung (8) zum Beschleunigen oder zum Bremsen angesteuert wird, um eine mit der Lenkbetätigung korrelierte Lenkbewegung des Zweirad-Fahrzeugs (1) zu erzeugen,
- wobei das jeweilige Gehäuse (9) bezüglich der Neigungsachse (16) drehfest am Fahrgestell (2) angebracht ist,
- dass die jeweilige Neigungssensorik (7) außerhalb des jeweiligen Gehäuses (9) am Fahrgestell (2) beweglich angebracht ist, so dass die Neigung der jeweiligen Neigungssensorik (7) veränderbar ist,
- dass die Lenkeinrichtung (11) mit der jeweiligen Neigungssensorik (7) so gekoppelt ist, dass eine Lenkbetätigung der Lenkeinrichtung (11) die Neigung von wenigstens einer der Neigungssensoriken (7) verändert.

2. Zweirad-Fahrzeug (1) nach Anspruch 1,
**dadurch gekennzeichnet,**
- **dass** die Lenkeinrichtung (11) mit der jeweiligen Neigungssensorik (7) so gekoppelt ist, dass eine Lenkbetätigung der Lenkeinrichtung (11) nur die Neigung der dem kurvenäußeren oder kurveninneren Rad (2) zugeordneten Neigungssensorik (7) verändert, oder
- **dass** die Lenkeinrichtung (11) mit beiden Neigungssensoriken (7) so gekoppelt ist, dass bei fahrendem Zweirad-Fahrzeug (1) eine Lenkbetätigung der Lenkeinrichtung (11) die Neigungen beider Neigungssensoriken (7) so verändert, dass das kurvenäußere Rad (5) beschleunigt, während das kurveninnere Rad (5) gebremst wird.

3. Zweirad-Fahrzeug (1) nach Anspruch 1 oder 2,
**dadurch gekennzeichnet,**
**dass** die Lenkeinrichtung (11) mit beiden Neigungssensoriken (7) so gekoppelt ist, dass bei stehendem Zweirad-Fahrzeug (1) eine Lenkbetätigung der Lenkeinrichtung (11) die Neigungen der beiden Neigungssensoriken (7) entgegengesetzt verändert, so dass das eine Rad (5) nach vorn antreibt, während das andere Rad (5) nach hinten antreibt.

4. Zweirad-Fahrzeug (1) nach einem der Ansprüche 1 bis 3,
**dadurch gekennzeichnet,**
- **dass** die Lenkeinrichtung (11) ein betätigbares Betätigungselement (12, 23) zum Erzeugen der Lenkbetätigung aufweist,
- **dass** die Lenkeinrichtung (11) eine mechanische Kopplungseinrichtung (24) aufweist, die das Betätigungselement (23) mechanisch mit der jeweiligen Neigungssensorik (7) koppelt, so dass eine Bewegung (25) des Betätigungselements (23) zum Erzeugen der Lenkbetätigung in eine Bewegung (26) zum Verändern der Neigung der jeweiligen Neigungssensorik (7) wandelt.

5. Zweirad-Fahrzeug (1) nach einem der Ansprüche 1 bis 4,
**dadurch gekennzeichnet,**
- **dass** die Lenkeinrichtung (11) wenigstens einen elektrischen Stellantrieb (18) aufweist, mit dem die Neigung der jeweiligen Neigungssensorik (7) veränderbar ist,
- **dass** die Lenkeinrichtung (11) mit dem jeweiligen Stellantrieb (18) elektrisch gekoppelt ist, so dass eine Lenkbetätigung der Lenkeinrichtung (11) eine Ansteuerung des jeweiligen Stellantriebs (18) zum Verändern der Neigung der jeweiligen Neigungssensorik (7) bewirkt.

6. Zweirad-Fahrzeug (1) nach einem der Ansprüche 1 bis 5,
**dadurch gekennzeichnet,**
- **dass** das Zweirad-Fahrzeug (1) mit einer Steuereinrichtung (29) zum Beschleunigen und/oder Bremsen des Zweirad-Fahrzeugs (1) ausgestattet ist,
- **dass** die Steuereinrichtung (29) mit beiden Neigungssensoriken (7) so gekoppelt ist, dass eine Steuerbetätigung der Steuerreinrichtung (29) die Neigung beider Neigungssensoriken (7) gleich verändert, so dass beide Räder (5) von den Balancesteuerungen (8) zum synchronen Beschleunigen oder Bremsen angesteuert werden, um eine mit der Steuerbetätigung korrelierte Beschleunigung oder Bremsung des Zweirad-Fahrzeugs (1) zu erzeugen.

7. Zweirad-Fahrzeug (1) nach Anspruch 6,
**dadurch gekennzeichnet,**
- **dass** die Steuereinrichtung (29) ein manuell betätigbares Betätigungselement (12, 23) zum Erzeugen der Steuerbetätigung aufweist,
- **dass** die Steuerreinrichtung (29) eine mechanische Kopplungseinrichtung (24) aufweist, die das Betätigungselement (23) mechanisch mit den Neigungssensoriken (7) koppelt, so dass eine Bewegung (25) des Betätigungselements (23) zum Erzeugen der Steuerbetätigung in eine Bewegung (26) zum Verändern der Neigung der beiden Neigungssensoriken (7) wandelt.

8. Zweirad-Fahrzeug (1) nach Anspruch 6,
**dadurch gekennzeichnet,**
- **dass** die Steuereinrichtung (29) wenigstens einen elektrischen Stellantrieb (18) aufweist, mit dem die Neigung der beiden Neigungssensoriken (7) veränderbar ist,
- **dass** die Steuereinrichtung (29) mit dem jeweiligen Stellantrieb (18) elektrisch gekoppelt ist, so dass eine Steuerbetätigung der Steuereinrichtung (29) eine Ansteuerung des jeweiligen Stellantriebs (18) zum Verändern der Neigung beider Neigungssensoriken (7) bewirkt.

9. Zweirad-Fahrzeug (1) nach einem der Ansprüche 6 bis 8,
**dadurch gekennzeichnet,**
**dass** die Steuereinrichtung (29) und die Lenkeinrichtung (11) ineinander integriert sind und eine Lenk- und Steuereinrichtung (30) bilden, die zum Lenken, zum Beschleunigen und zum Bremsen des Zweirad-Fahrzeugs (1) betätigbar ist.

10. Zweirad-Fahrzeug (1) nach den Ansprüchen 5, 8 und 9,
**dadurch gekennzeichnet,**
- **dass** die Lenk- und Steuereinrichtung (30) einen manuell betätigbaren Joystick (12) aufweist, der elektrisch mit dem jeweiligen Stellantrieb (18) gekoppelt ist,
- **dass** der Joystick (12) einen manuell betätigbaren Knüppel (31) aufweist,
- **dass** der Joystick (12) so ausgestaltet ist, dass ein Bewegen des Knüppels (31) nach links oder rechts einer Lenkbetätigung entspricht, während ein Bewegen des Knüppels (31) nach vorne oder nach hinten einer Steuerbetätigung entspricht.

11. Zweirad-Fahrzeug (1) nach einem der Ansprüche 1 bis 10,
**dadurch gekennzeichnet,**
- **dass** das Zweirad-Fahrzeug (1) eine Notbremseinrichtung (34) zum Bremsen des Zweirad-Fahrzeugs (1) aufweist,
- **dass** die Notbremseinrichtung (34) mit beiden Neigungssensoriken (7) so gekoppelt ist, dass eine Betätigung der Notbremseinrichtung (34) die Neigung beider Neigungssensoriken (7) gleich verändert, so dass beide Räder (5) von den Balancesteuerungen (8) zum synchronen Bremsen angesteuert werden.

12. Zweirad-Fahrzeug (1) nach einem der Ansprüche 1 bis 11,
**dadurch gekennzeichnet,**
- **dass** das Zweirad-Fahrzeug (1) für jedes Einrad-Fahrzeug (4) einen elektrischen Notlaufmotor (36) aufweist, der mit dem zugehörigen Rad (5) antriebsverbunden ist,
- **dass** bei einem Ausfall des Elektromotors (6) eines der Einrad-Fahrzeuge (4) der zugehörige Notlaufmotor (36) das zugehörige Rad (5) antreibt und/oder bremst.

13. Zweirad-Fahrzeug (1) nach Anspruch 12,
**dadurch gekennzeichnet,**
- **dass** der jeweilige Notlaufmotor (36) von der Balancesteuerung (8) des zugehörigen Einrad-Fahrzeugs (4) gesteuert wird, oder
- **dass** jedem Notlaufmotor (36) eine eigene Neigungssensorik (39) und eine eigene Balancesteuerung (40) zugeordnet ist.

14. Zweirad-Fahrzeug (1) nach einem der Ansprüche 1 bis 13,
**dadurch gekennzeichnet,**
- **dass** die Neigungssensorik (7) und die Balancesteuerung (8) des jeweiligen Einrad-Fahrzeugs (4) zu einer Balanceeinheit (43) zusammengefasst sind,
- **dass** die jeweilige Balanceeinheit (43) außerhalb des Gehäuses (9) am Fahrgestell (2) angeordnet ist,
- **dass** eine Neigung der Balanceeinheit (43) einer dazu synchronen Neigung der zugehörigen Neigungssensorik (7) entspricht.

## Claims

1. Dynamic self-balancing two-wheel vehicle (1)
- having a chassis (2) which supports a vehicle seat (3),
- having two dynamic self-balancing one-wheel vehicles (4) which have in each case a wheel (5), an electric motor (6), an inclination sensor device (7), a balance control system (8) and a housing (9),
- having a steering device (11) for steering the two-wheel vehicle (1),
- wherein the two one-wheel vehicles (4) are arranged on the chassis (2) such that they support the chassis (2) and their wheels (5) define a common wheel rotational axis (15),
- wherein the steering device (11) is coupled to at least one of the inclination sensor devices (7) such that a steering actuation of the steering device (11) changes an inclination of at least one of the inclination sensor devices (7) about an inclination axis (16), extending parallel to the wheel rotational axis (15), with respect to the chassis (2) such that the respective wheel (5) is controlled by the associated balance control system (8) for accelerating or for braking, in order to generate a steering movement, correlating with the steering actuation, of the two-wheel vehicle (1),
- wherein the respective housing (9) is mounted on the chassis (2) so as to be non-rotational with respect to the inclination axis (16),
- that the respective inclination sensor device (7) is mounted movably on the chassis (2) externally to the respective housing (9) such that the inclination of the respective inclination sensor device (7) can be changed,
- that the steering device (11) is coupled to the respective inclination sensor device (7) such that a steering actuation of the steering device (11) changes the inclination of at least one of the inclination sensor devices (7).

2. Two-wheel vehicle (1) according to claim 1,
**characterised in**
- **that** the steering device (11) is coupled to the respective inclination sensor device (7) such that a steering actuation of the steering device (11) changes only the inclination of the inclination sensor device (7) assigned to the wheel (2) on the outside of the curve or on the inside of the curve, or
- **that** the steering device (11) is coupled to both inclination sensor devices (7) such that, when the two-wheel vehicle (1) is driving, a steering actuation of the steering device (11) changes the inclinations of both inclination sensor devices (7) such that the wheel (5) on the outside of the curve accelerates, while the wheel (5) on the inside of the curve is braked.

3. Two-wheel vehicle (1) according to claim 1 or 2,
**characterised in**
**that** the steering device (11) is coupled to both inclination sensor devices (7) such that, when the two-wheel vehicle (1) is standing still, a steering actuation of the steering device (11) changes the inclinations of the two inclination sensors (7) in an opposed manner such that the one wheel (5) drives to the front while the other wheel (5) drives to the rear.

4. Two-wheel vehicle (1) according to any of claims 1 to 3,
**characterised in**
- **that** the steering device (11) has an actuatable actuating element (12, 23) for generating the steering actuation,
- **that** the steering device (11) has a mechanical coupling device (24) which couples the actuating element (23) mechanically to the respective inclination sensor device (7) such that a movement (25) of the actuating element (23) for generating the steering actuation is converted into a movement (26) for changing the inclination of the respective inclination sensor device (7).

5. Two-wheel vehicle (1) according to any of claims 1 to 4,
**characterised in**
- **that** the steering device (11) has at least one electrical actuator (18) with which the inclination of the respective inclination sensor device (7) can be changed,
- **that** the steering device (11) is electrically coupled to the respective actuator (18) such that a steering actuation of the steering device (11) effects an actuation of the respective actuator (18) for changing the inclination of the respective inclination sensor device (7).

6. Two-wheel vehicle (1) according to any of claims 1 to 5,
**characterised in**
- **that** the two-wheel vehicle (1) is equipped with a control device (29) for accelerating and/or braking the two-wheel vehicle (1),
- **that** the control device (29) is coupled to both inclination sensor devices (7) such that a control actuation of the control device (29) changes the inclination of both inclination sensor devices (7) equally, such that both wheels (5) are controlled by the balance control systems (8) for synchronous acceleration or braking, in order to generate an acceleration or braking of the two-wheel vehicle (1) which correlates to the control actuation.

7. Two-wheel vehicle (1) according to claim 6,
**characterised in**
- **that** the control device (29) has a manually actuatable actuating element (12, 23) for generating the control actuation,
- **that** the control device (29) has a mechanical coupling device (24) which couples the actuating element (23) mechanically to the inclination sensor devices (7) such that a movement (25) of the actuating element (23) for generating the control actuation is converted into a movement (26) for changing the inclination of the two inclination sensor devices (7).

8. Two-wheel vehicle (1) according to claim 6,
**characterised in**
- **that** the control device (29) has at least one electrical actuator (18) with which the inclination of the two inclination sensor devices (7) can be changed,
- **that** the control device (29) is electrically coupled to the respective actuator (18), such that a control actuation of the control device (29) effects an actuation of the respective actuator (18) for changing the inclination of both inclination sensor devices (7).

9. Two-wheel vehicle (1) according to any of claims 6 to 8,
**characterised in**
- **that** the control device (29) and the steering device (11) are integrated into one another and form a steering and control device (30) which can be actuated for steering, for accelerating and for braking the two-wheel vehicle (1).

10. Two-wheel vehicle (1) according to claims 5, 8 and 9,
**characterised in**
- **that** the steering and control device (30) has a manually actuatable joystick (12) which is coupled electrically to the respective actuator (18),
- **that** the joystick (12) has a manually actuatable stick (31),
- **that** the joystick (12) is configured such that a movement of the stick (31) to the left or to the right corresponds to a steering actuation, while a movement of the stick (31) to the front or to the rear corresponds to a control actuation.

11. Two-wheel vehicle (1) according to any of claims 1 to 10,
**characterised in**
- **that** the two-wheel vehicle (1) has an emergency braking device (34) for braking the two-wheel vehicle (1),
- **that** the emergency braking device (34) is coupled to both inclination sensors (7) such that an actuation of the emergency braking device (34) changes the inclination of both inclination sensor devices (7) equally, such that both wheels (5) are controlled by the balance control systems (8) for synchronous braking.

12. Two-wheel vehicle (1) according to any of claims 1 to 11,
**characterised in**
- **that** the two-wheel vehicle (1) has for each single-wheel vehicle (4) an electric emergency motor (36) which is drivingly connected to the associated wheel (5),
- **that** in the case of a failure of the electric motor (6) of one of the single-wheel vehicles (4) the associated emergency motor (36) drives and/or brakes the associated wheel (5).

13. Two-wheel vehicle (1) according to claim 12,
**characterised in**
- **that** the respective emergency motor (36) is controlled by the balance control system (8) of the associated single-wheel vehicle (4), or
- **that** each emergency motor (36) is assigned its own inclination sensor device (39) and its own balance control system (40).

14. Two-wheel vehicle (1) according to any of claims 1 to 13,
**characterised in**
- **that** the inclination sensor device (7) and the balance control system (8) of the respective single-wheel vehicle (4) are combined to form a balance unit (43),
- **that** the respective balance unit (43) is arranged on the chassis (2) externally to the housing (9),
- **that** an inclination of the balance unit (43) corresponds to an inclination, synchronous thereto, of the associated inclination sensor device (7).

## Revendications

1. Véhicule à deux roues à autoéquilibrage dynamique (1)
- avec un châssis (2) qui supporte un siège de véhicule (3),
- avec deux véhicules à une roue à autoéquilibrage dynamique (4), qui présentent respectivement une roue (5), un moteur électrique (6), un système de capteurs d'inclinaison (7), une commande d'équilibrage (8) et un boîtier (9),
- avec un dispositif de direction (11) pour diriger le véhicule à deux roues (1),
- dans lequel les deux véhicules à une roue (4) sont disposés sur le châssis (2) de sorte qu'ils supportent le châssis (2) et que leurs roues (5) définissent un axe de rotation de roue commun (15),
- dans lequel le dispositif de direction (11) est couplé à au moins un des systèmes de capteurs d'inclinaison (7) de sorte qu'un actionnement de direction du dispositif de direction (11) modifie une inclinaison d'au moins un des systèmes de capteurs d'inclinaison (7) autour d'un axe d'inclinaison (16) s'étendant parallèlement à l'axe de rotation de roue (15) par rapport au châssis (2) de sorte que la roue respective (5) est commandée par la commande d'équilibrage correspondante (8) pour accélérer ou pour freiner afin de générer un mouvement de direction du véhicule à deux roues (1) corrélé avec l'actionnement de direction,
- dans lequel le boîtier respectif (9) est placé sur le châssis (2) de manière non rotative par rapport à l'axe d'inclinaison (16),
- en ce que le système de capteurs d'inclinaison respectif (7) est placé de manière mobile sur le châssis (2) à l'extérieur du boîtier respectif (9), de sorte que l'inclinaison du système de capteurs d'inclinaison respectif (7) peut être modifiée,
- en ce que le dispositif de direction (11) est couplé au système de capteurs d'inclinaison respectif (7) de sorte qu'un actionnement de direction du dispositif de direction (11) modifie l'inclinaison d'au moins un des systèmes de capteurs d'inclinaison (7).

2. Véhicule à deux roues (1) selon la revendication 1,
**caractérisé en ce**
- **que** le dispositif de direction (11) est couplé au système de capteurs d'inclinaison respectif (7) de sorte qu'un actionnement de direction du dispositif de direction (11) modifie uniquement l'inclinaison du système de capteurs d'inclinaison (7) correspondant à la roue extérieure ou intérieure (2) au virage, ou
- **que** le dispositif de direction (11) est couplé aux deux systèmes de capteurs d'inclinaison (7) de sorte que, lors du déplacement du véhicule à deux roues (1), un actionnement de direction du dispositif de direction (11) modifie les inclinaisons des deux systèmes de capteurs d'inclinaison (7) de sorte que la roue extérieure (5) au virage accélère tandis que la roue intérieure (5) au virage est freinée.

3. Véhicule à deux roues (1) selon la revendication 1 ou 2,
**caractérisé en ce**
**que** le dispositif de direction (11) est couplé aux deux systèmes de capteurs d'inclinaison (7) de sorte que, lorsque le véhicule à deux roues (1) est à l'arrêt, un actionnement de direction du dispositif de direction (11) modifie les inclinaisons des deux systèmes de capteurs d'inclinaison (7) dans des directions opposées, de sorte qu'une roue (5) avance tandis que l'autre roue (5) recule.

4. Véhicule à deux roues (1) selon l'une quelconque des revendications 1 à 3, **caractérisé en ce**
- **que** le dispositif de direction (11) présente un élément d'actionnement actionnable (12, 23) pour générer l'actionnement de direction,
- **que** le dispositif de direction (11) présente un dispositif de couplage mécanique (24) qui couple mécaniquement l'élément d'actionnement (23) au système de capteurs d'inclinaison respectif (7), de sorte qu'un mouvement (25) de l'élément d'actionnement (23) pour générer l'actionnement de direction est converti en un mouvement (26) pour modifier l'inclinaison du système de capteurs d'inclinaison respectif (7).

5. Véhicule à deux roues (1) selon l'une quelconque des revendications 1 à 4, **caractérisé en ce**
- **que** le dispositif de direction (11) présente au moins un actionneur électrique (18) avec lequel l'inclinaison du système de capteurs d'inclinaison respectif (7) peut être modifiée,
- **que** le dispositif de direction (11) est couplé électriquement à l'actionneur respectif (18), de sorte qu'un actionnement de direction du dispositif de direction (11) provoque une commande de l'actionneur respectif (18) afin de modifier l'inclinaison du système de capteurs d'inclinaison respectif (7).

6. Véhicule à deux roues (1) selon l'une quelconque des revendications 1 à 5, **caractérisé en ce**
- **que** le véhicule à deux roues (1) est équipé d'un dispositif de commande (29) pour accélérer et/ou freiner le véhicule à deux roues (1),
- **que** le dispositif de commande (29) est couplé aux deux systèmes de capteurs d'inclinaison (7) de sorte qu'un actionnement de commande du dispositif de commande (29) modifie de la même manière l'inclinaison des deux systèmes de capteurs d'inclinaison (7), de sorte que les deux roues (5) sont commandées par les commandes d'équilibrage (8) pour accélérer ou freiner de manière synchrone, afin de générer une accélération ou un freinage du véhicule à deux roues (1) en corrélation avec l'actionnement de commande.

7. Véhicule à deux roues (1) selon la revendication 6,
**caractérisé en ce**
- **que** le dispositif de commande (29) présente un élément d'actionnement actionnable manuellement (12, 23) pour générer l'actionnement de commande,
- **que** le dispositif de commande (29) présente un dispositif de couplage mécanique (24) qui couple mécaniquement l'élément d'actionnement (23) aux systèmes de capteurs d'inclinaison (7), de sorte qu'un mouvement (25) de l'élément d'actionnement (23) pour générer l'actionnement de commande est converti en un mouvement (26) pour modifier l'inclinaison des deux systèmes de capteurs d'inclinaison (7).

8. Véhicule à deux roues (1) selon la revendication 6,
**caractérisé en ce**
- **que** le dispositif de commande (29) présente au moins un actionneur électrique (18) avec lequel l'inclinaison des deux systèmes de capteurs d'inclinaison (7) peut être modifiée,
- **que** le dispositif de commande (29) est couplé électriquement à l'actionneur respectif (18), de sorte qu'un actionnement de commande du dispositif de commande (29) provoque une commande de l'actionneur respectif (18) afin de modifier l'inclinaison des deux systèmes de capteurs d'inclinaison (7).

9. Véhicule à deux roues (1) selon l'une quelconque des revendications 6 à 8, **caractérisé en ce**
**que** le dispositif de commande (29) et le dispositif de direction (11) sont intégrés l'un dans l'autre et forment un dispositif de direction et de commande (30) qui peut être actionné pour diriger, accélérer et freiner le véhicule à deux roues (1).

10. Véhicule à deux roues (1) selon les revendications 5, 8 et 9,
**caractérisé en ce**
- **que** le dispositif de direction et de commande (30) présente un joystick actionnable manuellement (12), qui est couplé électriquement à l'actionneur respectif (18),
- **que** le joystick (12) présente un manche (31) actionnable manuellement,
- **que** le joystick (12) est configuré de sorte qu'un déplacement du manche (31) vers la gauche ou la droite correspond à un actionnement de direction, tandis qu'un déplacement du manche (31) vers l'avant ou l'arrière correspond à un actionnement de commande.

11. Véhicule à deux roues (1) selon l'une quelconque des revendications 1 à 10, **caractérisé en ce**
- **que** le véhicule à deux roues (1) présente un dispositif de freinage d'urgence (34) pour freiner le véhicule à deux roues (1),
- **que** le dispositif de freinage d'urgence (34) est couplé aux deux systèmes de capteurs d'inclinaison (7) de sorte que l'actionnement du dispositif de freinage d'urgence (34) modifie de la même manière l'inclinaison des deux systèmes de capteurs d'inclinaison (7), de sorte que les deux roues (5) sont commandées par les commandes d'équilibrage (8) pour freiner de manière synchrone.

12. Véhicule à deux roues (1) selon l'une quelconque des revendications 1 à 11, **caractérisé en ce**
- **que** le véhicule à deux roues (1) présente, pour chaque véhicule à une roue (4), un moteur de secours électrique (36), qui est en liaison d'entraînement avec la roue correspondante (5),
- **que**, en cas de défaillance du moteur électrique (6) de l'un des véhicules à une roue (4), le moteur de secours correspondant (36) entraîne et/ou freine la roue correspondante (5).

13. Véhicule à deux roues (1) selon la revendication 12,
**caractérisé en ce**
- **que** le moteur de secours respectif (36) est commandé par la commande d'équilibrage (8) du véhicule à une roue correspondant (4), ou
- **que** chaque moteur de secours (36) est doté de son propre système de capteurs d'inclinaison (39) et de sa propre commande d'équilibrage (40).

14. Véhicule à deux roues (1) selon l'une quelconque des revendications 1 à 13, **caractérisé en ce**
- **que** le système de capteurs d'inclinaison (7) et la commande d'équilibrage (8) du véhicule à une roue respectif (4) sont combinés pour former une unité d'équilibrage (43),
- **que** l'unité d'équilibrage respective (43) est disposée à l'extérieur du boîtier (9) sur le châssis (2),
- **qu'**une inclinaison de l'unité d'équilibrage (43) correspond à une inclinaison, synchrone avec celle-ci, du système de capteurs d'inclinaison correspondant (7).
